# EUROPEAN PATENT SPECIFICATION

(11) **EP 1 982 590 B1**
(45) Date of publication and mention of the grant of the patent: **16.08.2017**
(21) Application number: 07707957.2
(22) Date of filing: 02.02.2007
(51) Int. Cl.: A01N 25/10, A01C 1/00, A01M 1/20, A01N 51/00, A01P 7/04, A61K 9/00

(54) **PESTICIDE-CONTAINING RESIN COMPOSITIONS CONTROLLED IN DISSOLUTION, PROCESS FOR PRODUCTION THEREOF, AND PESTICIDE PREPARATIONS**
PESTIZIDHALTIGE HARZZUSAMMENSETZUNGEN MIT KONTROLLIERTER AUFLÖSUNG, VERFAHREN ZU IHRER HERSTELLUNG UND PESTIZIDPRÄPARATE
COMPOSITIONS DE RESINE CONTENANT UN PESTICIDE A DISSOLUTION REGULEE, LEUR PROCEDE DE PRODUCTION ET PREPARATIONS PESTICIDES

(30) Priority: 06.02.2006 JP 2006028904; 06.02.2006 JP 2006029006
(43) Date of publication of application: 22.10.2008
(60) Divisional application: 11168112.8
(73) Proprietor: NIPPON SODA CO., LTD., Chiyoda-ku, Tokyo 100-8165 (JP)
(72) Inventor: ENDO, Yoshihisa, Makinohara-shi, Shizuoka 4210412 (JP); YAMAMURA, Satoru, Makinohara-shi, Shizuoka 4210412 (JP); MAEKAWA, Yuichi, Makinohara-shi, Shizuoka 4210412 (JP)
(74) Representative: Cabinet Plasseraud
(86) International application number: PCT/JP2007/051808
(87) International publication number: WO 2007/091494

(56) References cited:
- EP-A1- 0 537 998
- EP-A1- 0 890 308
- EP-A1- 1 465 484
- EP-A2- 0 268 925
- EP-A2- 0 268 926
- EP-A2- 0 268 927
- EP-A2- 0 268 928
- EP-A2- 0 302 824
- WO-A1-95/17814
- WO-A1-2004/077947
- WO-A1-2006/013972
- JP-A- 01 063 501
- JP-A- 05 194 187
- JP-A- 07 163 240
- JP-A- 07 163 240
- JP-A- 09 507 227
- JP-A- 11 079 907
- JP-A- 11 228 844
- JP-A- 63 141 902
- JP-A- 63 150 203
- JP-A- 63 198 601
- JP-A- 63 198 602
- JP-A- S58 131 903

## Description

### TECHNICAL FIELD

The present invention relates to a resin composition containing an agricultural chemical in which the release of an agricultural chemical active ingredient is controlled, a production method thereof, an agricultural chemical formulation, a treatment method using the formulation, a plant seed, and a formulation containing an agricultural chemical.

Priority is claimed on Japanese Patent Application No. 2006-028904, filed February 6, 2006, and Japanese Patent Application No. 2006-029006, filed February 6, 2006.

### BACKGROUND ART

Conventionally, agricultural chemical active ingredients are used as various agricultural chemical formulations. However, when preparing a formulation by the conventional preparation method, problems arise at times, depending on the agricultural chemical active ingredient, such as the phytotoxicity due to the excessively high release rate thereof and the failure in attaining sufficient residual activity.

In order to solve such problems, agricultural chemical formulations in which the release of an agricultural chemical active ingredient is controlled has been proposed and developed. For example, in Patent Document 1, a resin composition containing an agricultural chemical characterized by the following features is proposed. That is, the composition can be obtained by heating and mixing (a) at least one of readily-water-soluble agricultural chemical active ingredients, (b) a non-water-soluble substance or a poorly water-soluble substance having a melting point or a softening point of 50°C to less than 130°C, and (c) white carbon at a temperature equal to or higher than the melting point or the softening point of (b) and also equal to or less than 130°C. In addition, this document also describes that a nonionic surfactant can be added to this composition as necessary.

Additionally, Patent Document 2 has proposed the following. That is, an agricultural chemical formulation for water surface application which contains an agricultural chemical-containing resin composition including an agricultural chemical active ingredient, polyethylene and hydrophobic silica and in which the release of the components are controlled, and which has satisfactory floating mobility, its production method, and an agricultural chemical composition where the release of the components are controlled.

However, there were cases where the release control of the agricultural chemical active ingredient was not necessarily sufficient even with the agricultural chemical compositions (agricultural chemical formulations) described in these documents. Accordingly, there was a demand for the development of agricultural chemical compositions in which the release of the agricultural chemical active ingredient is better controlled.

[Patent Document 1] Japanese Unexamined Patent Application, First Publication No. Hei 8-92007
[Patent Document 2] Japanese Unexamined Patent Application, First Publication No. Hei 11-315004

EP0890308 A1 discloses coated pesticidal matrix compositions of between 2-10 µm, that comprise an acrylate-based copolymer resin, a pesticide and the optional presence of glident, selected from various metal stearates or talc. JPS58131903 discloses granular agrochemical compositions comprising preferably a styrene-maleic anhydride copolymer, that shows good disintegrability. EP0302824 A2 and WO2004077947 A1 disclose other resins using styrene-maleic anhydride copolymer as the carrier.

### DISCLOSURE OF INVENTION

### PROBLEMS TO BE SOLVED BY THE INVENTION

The present invention is made in view of the above circumstances concerning conventional techniques and its object is to provided an agricultural chemical-containing resin composition in which the release of an agricultural chemical active ingredient is controlled, a production method thereof, an agricultural chemical formulation, a treatment method using the formulation, a plant seed, and the use of the agricultural chemical-containing resin composition.

### MEANS FOR SOLVING THE PROBLEMS

The present inventors conducted an intensive study in order to solve the above problems and discovered the following as a result to complete the present invention. That is, a resin composition containing an agricultural chemical in which the release of an agricultural chemical active ingredient is satisfactorily controlled can be obtained by forming a compatible state or a matrix using an agricultural chemical active ingredient, a resin, and a fatty acid metal salt (which is added for the release control), or alternatively, by forming a compatible state or a matrix using an agricultural chemical active ingredient, a (meth)acrylate-based resin, and a release controlling agent.

the present invention is as discloses in the attached set of claims. It is also described resin compositions containing an agricultural chemical of the following aspects (1) to (13).
(1) A resin composition containing an agricultural chemical which contains the following materials (A), (B-1), and (C-1), and characterized in that the composition is either in a compatible state or forms a matrix.
   (A) an agricultural chemical active ingredient
   (B-1) a resin
   (C-1) a fatty acid metal salt
(2) The resin composition containing an agricultural chemical according to aspect (1) in which the fatty acid metal salt is calcium stearate.
(3) The resin composition containing an agricultural chemical according to aspect (1) or (2) in which the resin is at least one material selected from the group consisting of a styrene-maleic anhydride based copolymer, a polyolefin-based resin, a poly(meth)acrylate-based resin, a polystyrene-based resin, a polyester-based resin, a polyvinylchloride-based resin, a polyvinylidene chloride resin, a polyamide resin, a polyacetal resin, a polycarbonate resin, and a polyurethane resin.
(4) The resin composition containing an agricultural chemical according to aspect (1) characterized in that the composition further includes at least one material selected from the group consisting of a water-soluble polymer, silicon oxide, a hydrocarbon-based lubricant, and a surfactant.
(5) A resin composition containing an agricultural chemical which contains the following materials (A), (B-2), and (C-2), and characterized in that the composition is either in a compatible state or forms a matrix.
   (A) an agricultural chemical active ingredient
   (B-2) a (meth)acrylate-based resin
   (C-2) a release controlling agent
(6) The resin composition containing an agricultural chemical according to aspect (5) characterized in that the release controlling agent is at least one material selected from the group consisting of a water-soluble polymer, silicon oxide, a hydrocarbon-based lubricant, and a surfactant.
(7) The resin composition containing an agricultural chemical according to aspect (4) or (6) characterized in that the silicon oxide is hydrophobic white carbon.
(8) The resin composition containing an agricultural chemical according to aspect (4) or (6) characterized in that the hydrocarbon-based lubricant is at least one material selected from the group consisting of liquid paraffin, natural paraffin, microwax, polyethylene wax, polypropylene wax, a chlorinated hydrocarbon, a fluorocarbon, microcrystalline wax, and Fischer-Tropsch wax.
(9) The resin composition containing an agricultural chemical according to aspect (1) or (5) characterized in that the agricultural chemical active ingredient is at least one of compounds having a water solubility at 25°C of 100 ppm or more.
(10) The resin composition containing an agricultural chemical according to aspect (1) or (5) characterized in that the agricultural chemical active ingredient is at least one of neonicotinoid-based compounds.
(11) The resin composition containing an agricultural chemical according to aspect (10) characterized in that the neonicotinoid-based compound is at least one compound selected from the group consisting of nitenpyram, imidacloprid, acetamiprid, thiamethoxam, clothianidin, thiacloprid, and dinotefuran.
(12) The resin composition containing an agricultural chemical according to aspect (1) or (5) characterized in that the average particle size of the ingredient powder is 200 µm or less.
(13) The resin composition containing an agricultural chemical according to aspect (1) or (5) characterized in that the average particle size of the ingredient powder is within a range of 1 to 100 µm.
It is also described the following methods (14) to (19) for producing a resin composition containing an agricultural chemical.
(14) A method for producing a resin composition containing an agricultural chemical of aspect (1) characterized by including the steps of mixing the following materials (A), (B-1), and (C-1); heating and melting a mixture of the materials; kneading the mixture; and cooling the mixture.
   (A) an agricultural chemical active ingredient
   (B-1) a resin
   (C-1) a fatty acid metal salt
(15) A method for producing a resin composition containing an agricultural chemical of aspect (5) characterized by including the steps of mixing the following materials (A), (B-2), and (C-2); heating and melting a mixture of the materials; kneading the mixture; and cooling the mixture.
   (A) an agricultural chemical active ingredient
   (B-2) a (meth)acrylate-based resin
   (C-2) a release controlling agent
(16) A method for producing a resin composition containing an agricultural chemical of aspect (1) characterized by including the steps of dissolving, homogenizing, and/or mixing the following materials (A), (B-1), and (C-1) in an organic solvent; and thereafter removing the organic solvent by distillation.
   (A) an agricultural chemical active ingredient
   (B-1) a resin
   (C-1) a fatty acid metal salt
(17) A method for producing a resin composition containing an agricultural chemical of aspect (5) characterized by including the steps of dissolving, homogenizing, and/or mixing the following materials (A), (B-2), and (C-2) in an organic solvent; and thereafter removing the organic solvent by distillation.
   (A) an agricultural chemical active ingredient
   (B-2) a (meth)acrylate-based resin
   (C-2) a release controlling agent
(18) A method for producing a resin composition containing an agricultural chemical of aspect (1) characterized by including the steps of dissolving, homogenizing, and/or mixing the following material (A) in an aqueous alkaline solution of the following (B-1); and thereafter making the resultant an acidic slurry; filtrating the slurry; and drying the resultant.
   (A) an agricultural chemical active ingredient
   (B-1) a resin
(19) A method for producing a resin composition containing an agricultural chemical of aspect (5) characterized by including the steps of dissolving, homogenizing, and/or mixing the following materials (A) and (C-2) in an aqueous alkaline solution of the following (B-2); and thereafter making the resultant an acidic slurry; filtrating the slurry; and drying the resultant.
   (A) an agricultural chemical active ingredient
   (B-2) a (meth)acrylate-based resin
   (C-2) a release controlling agent

   It is also described the following agricultural chemical formulations (20) to (28).
(20) An agricultural chemical formulation containing at least one resin composition containing an agricultural chemical according to any one of aspects (1) to (13).
(21) An agricultural chemical formulation characterized by
   containing at least one resin composition containing an agricultural chemical which is a resin composition containing the following materials (A), (B-1), and (C-1), and the composition is either in a compatible state or composed of a particulate matter forming a matrix and having an average particle size of 200 µm or less; and
   being used as a seed treating agent, a soil treating agent, or a foliage treating agent.
   (A) an agricultural chemical active ingredient
   (B-1) a resin
   (C-1) a fatty acid metal salt
(22) An agricultural chemical formulation characterized by
   containing at least one resin composition containing an agricultural chemical which is a resin composition containing the following materials (A), (B-2), and (C-2), and the composition is either in a compatible state or composed of a particulate matter forming a matrix and having an average particle size of 200 µm or less; and
   being used as a seed treating agent, a soil treating agent, or a foliage treating agent.
   (A) an agricultural chemical active ingredient
   (B-2) a (meth)acrylate-based resin
   (C-2) a release controlling agent
(23) The agricultural chemical formulation according to aspect (21) or (22) characterized in that an average particle size of the resin composition containing an agricultural chemical is within a range of 1 to 100 µm.
(24) The agricultural chemical formulation according to aspect (21) or (22) characterized in that the agricultural chemical active ingredient is at least one of compounds having a water solubility at 25 °C of 100 ppm or more.
(25) The agricultural chemical formulation according to aspect (21) or (22) characterized in that the agricultural chemical active ingredient is at least one of neonicotinoid-based compounds.
(26) The agricultural chemical formulation according to aspect (25) characterized in that the neonicotinoid-based compound is at least one compound selected from the group consisting of nitenpyram, imidacloprid, acetamiprid, thiamethoxam, clothianidin, thiacloprid, and dinotefuran.
(27) The agricultural chemical formulation according to any one of aspects (20), (21), and (25) characterized by including at least one of resin compositions containing an agricultural chemical, and at least one additional agricultural chemical active ingredient other than that contained in the composition.
(28) The agricultural chemical formulation according to aspect (27) characterized in that the additional agricultural chemical active ingredient is a pyrethroid-based compound.
   It is also described the following treatment methods (29) and (30).
(29) A treatment method characterized by carrying out a seed treatment or a soil treatment simultaneously or on separate occasions using a composition containing at least one of the agricultural chemical formulations according to any one of aspects (20), (21) and (25), and at least one additional agricultural chemical active ingredient different from that contained in the agricultural chemical formulations.
(30) The treatment method according to aspect (29) characterized in that the additional agricultural chemical active ingredient is a pyrethroid-based compound.
   It is also described the following plant seed (31).
(31) A plant seed treated by the treatment method according to aspect (29) or (30).
   It is also described the following formulations (32) to (34) containing an agricultural chemical.
(32) A formulation containing an agricultural chemical characterized by including at least one of the resin compositions containing an agricultural chemical according to any one of aspects (1) to (13), or by including at least one of the resin compositions containing an agricultural chemical according to any one of aspects (1) to (13) and at least one additional agricultural chemical active ingredient different from the agricultural chemical active ingredient contained in the composition, and in which the formulation is used in one of the applications selected from the group consisting of pharmaceuticals, veterinary medicines, food preservatives, and biocides.
(33) The formulation containing an agricultural chemical according to aspect (32) characterized in that the formulation is used in one of the applications selected from the group consisting of soil pest control agents, termite control agents, clothing agents, pest control agents, wood pest control agents, bait agents, animal ectoparasite control agents, sanitary pest control agents, domestic communicable disease control agents, ship bottom coatings, algicides for fishing nets and the like, and mildewproofing agents for wood and the like.
(34) The formulation containing an agricultural chemical according to aspect (32) or (33) characterized in that the additional agricultural chemical active ingredient is a pyrethroid-based compound.

### EFFECTS OF THE INVENTION

According to the present invention, a resin composition containing an agricultural chemical in which the release of an agricultural chemical active ingredient is sufficiently controlled is provided.

By using an agricultural chemical formulation containing the agricultural chemical-containing resin composition of the present invention, it is possible to suppress the phenomenon in which a large amount of an agricultural chemical active ingredient is released in a short period of time immediately after an agricultural chemical treatment, that is, the phenomenon in which the initial burst is suppressed and the agricultural chemical active ingredient which should inherently be released remains without the entire amount thereof being released, or in other words, dead stock.

According to the agricultural chemical formulation of the present invention, residual activity can be maintained and the problem of an increase in the amount of agricultural chemical active ingredient remaining in the crop or the occurrence of phytotoxicity can be solved, and even the prevention of the agricultural chemical active ingredient remaining in the environment is possible. Moreover, in addition to the effects described above, the agricultural chemical formulation of the present invention achieves various effects such as the improvement in light stability, the control of vaporization properties, the improvement in the residual activity of the agricultural chemical active ingredient and reductions in the amount thereof being lost to the environment due to the improved rain resistance, reduction in the total amount of agricultural chemical being sprayed, reduction in the frequency of sprayings, and reduction in the toxicity to the sprayer.

The agricultural chemical formulation of the present invention is particularly useful as a seed treating agent and a soil treating agent.

### BEST MODE FOR CARRYING OUT THE INVENTION

Items i.e., 1) a resin composition containing an agricultural chemical, 2) a production method of a resin composition containing an agricultural chemical, 3) an agricultural chemical formulation, 4) a treatment method, 5) a plant seed, and 6) a formulation containing an agricultural chemical are described in detail below in different sections.

### 1) Resin composition containing agricultural chemical

The agricultural chemical-containing resin composition of the present invention is as disclosed in the attached set of claims and is a composition containing an agricultural chemical active ingredient (A), a resin (B-1), and a fatty acid metal salt (C-1), and characterized in that the composition is either in a compatible state or forms a matrix.

It is described a resin composition containing an agricultural chemical which is a composition containing an agricultural chemical active ingredient (A), a (meth)acrylic resin (B-2), and a release controlling agent (C-2), and characterized in that the composition is either in a compatible state or forms a matrix.

### (A) Agricultural chemical active ingredient

An agricultural chemical active ingredient used in the present invention is not limited in terms of being a liquid form or a solid form, an organic compound or an inorganic compound, or a single compound or a mixture. Specific examples thereof include the fungicides, insecticides, acaricides, plant growth regulators, and herbicides listed below. These agricultural chemical active ingredients can be used alone or as a mixture of two or more types thereof.

### Fungicides:

Copper agents: basic copper chloride, basic copper sulfate, or the like;
Sulfur agents: thiuram, zineb, maneb, mancozeb, ziram, propineb, polycarbamate, or the like;
Polyhaloalkylthio agents: captan, folpet, dichlorofluanid, or the like;
Organic chlorine agents: chlorothalonil, fthalide, or the like;
Organic phosphorus agents: IBP, EDDP, trichlophosmethyl, pyrazophos, fosetyl, or the like;
Benzimidazole agents: thiophanate-methyl, benomyl, carbendazim, thiabendazole, or the like;
Dicarboxyimide agents: iprodione, procymidone, vinclozolin, fluoroimide, or the like; Carboxyamide agents: oxycarboxin, mepronil, flutolanil, tecloftalam, trichlamide, pencycuron, or the like;
Acylalanine agents: metalaxyl, oxadixyl, furalaxyl, or the like;
Methoxyacrylate agents: kresoxim-methyl, azoxystrobin, metominostrobin, or the like;
Anilinopyrimidine agents: andoprin, mepanipyrim, pyrimethanil, diprozinil, or the like; SBI agents: triadimefon, triadimenol, bitertanol, myclobutanil, hexaconazole, propiconazole, triflumizole, prochloraz, pefurazoate, fenarimol, pyrifenox, triforine, flusilazole, etaconazole, dichlobutorazol, fluotrimazole, flutriafen, penconazole, diniconazole, imazalil, tridemorph, fenpropimorph, buthiobate, epoxiconazole, metoconazole, or the like;
Antibiotic agents: polyoxins, blasticidin S, kasugamycin, validamycin, dihydrostreptomycin sulfate, or the like;
Others: propamocarb hydrochloride, quintozene, hydroxyisoxazole, anilazine, isoprothiolane, probenazole, chinomethionat, dithianon, dinocap, diclomezine, ferimzone, fluazinam, pyroquilon, tricyclazole, oxolinic acid, iminoctadine acetate, cymoxanil, pyrrolnitrin, methasulfocarb, diethofencarb, binapacryl, lecithin, sodium bicarbonate, fenaminosulf, dodine, dimethomorph, phenazine oxide, carpropamid, flusulfamide, fludioxonil, famoxadon, or the like.

### Insecticides/acaricides:

Organic phosphorus and carbamate-based insecticides: fenthion, fenitrothion, diazinon, chlorpyrifos, ESP, vamidothion, phenthoate, dimethoate, formothion, malathion, trichlorfon, thiometon, phosmet, dichlorvos, acephate, EPBP, methyl parathion, oxydemeton-methyl, ethion, salithion, cyanophos, isoxathion, pyidafenthion, phosalone, methidathion, sulprofos, chlorfenvinphos, tetrachlorvinphos, dimethylvinphos, propaphos, isofenphos, ethylthiometon, profenofos, pyraclofos, monocrotophos, azinphos-methyl, aldicarb, methomyl, thiodicarb, carbofuran, carbosulfan, benfuracarb, furathiocarb, propoxur, BPMC, MTMC, MIPC, carbaryl, pirimicarb, ethiofencarb, fenoxycarb, or the like;
Pyrethroid-based insecticides: permethrin, cypermethrin, deltamethrin, fenvalerate, fenpropathrin, pyrethrins, allethrin, tetramethrin, resmethrin, dimethrin, propathrin, phenothrin, prothrin, fluvalinate, cyfluthrin, cyhalothrin, flucythrinate, etofenprox, cycloprothrin, tralomethrin, silafluofen, brofenprox, acrinathrin, or the like; Neonicotinoid based compounds;
Benzoylurea-based and other insecticides: diflubenzuron, chlorfluazuron, hexaflumuron, triflumuron, flufenoxuron, flucycloxuron, buprofezin, pyriproxyfen, methoprene, benzoepin, diafenthiuron, acetamiprid, imidacloprid, nitenpyram, fipronil, cartap, thiocyclam, bensultap, nicotine sulfate, rotenone, metaldehyde, machine oil, pesticides to microbial such as BT or insect pathogenic viruses, pheromone agents, or the like.

Nematicides: phenamiphos, fosthiazate, or the like.
Acaricides: chlorobenzilate, phenisobromolate, dicofol, amitraz, BPPS, benzomate, hexathiazox, fenbutatin oxide, polynactin, quinomethionate, CPCBS, tetradifon, avermectin, milbemectin, clofentezine, cyhexatin, pyridaben, fenpyroximate, tebufenpyrad, pyrimidifen, fenothiocarb, dienochlor, or the like.
Plant growth regulators: gibberellins (for example, gibberellin A3, gibberellin A4, and gibberellin A7), IAA, NAA, or the like.

### Herbicides:

Anilide based herbicides: diflufenican, propanil, or the like;
Chloroacetoanilide-based herbicides: alachlor, pretilachlor, or the like;
Aryloxyalkanoic acid-based herbicides: 2,4-D, 2-4-DB, or the like; Aryloxyphenoxyalkanoic acid-based herbicides: diclofop-methyl, fenoxaprop-ethyl, or the like;
Arylcarboxylic acid-based herbicides: dicamba, pyrithiobac, or the like;
Imidazoline-based herbicides: imazaquin, imazethapyr, or the like;
Urea-based herbicides: diuron, isoproturon, or the like;
Carbamate-based herbicides: chlorprofam, fenmedifam, or the like;
Thiocarbamate-based herbicides: thiobencarb, EPTC, or the like;
Dinitroaniline-based herbicides: trifluralin, pendimethalin, or the like;
Diphenyl ether-based herbicides: aciflurofen, fomesafen, or the like;
Sulfonylurea-based herbicides: bensulfuron-methyl, nicosulfuron, or the like;
Triazinone-based herbicides: metribuzin, metamitron, or the like;
Triazine-based herbicides: atrazine, cyanazine, or the like;
Triazopyrimidine-based herbicides: flumetsulam, or the like;
Nitrile-based herbicides: bromoxinil, dichlobenil, or the like;
Phosphoric acid-based herbicides: glyphosate, glyphosinate, or the like;
Quaternary ammonium salt-based herbicides: paraquat, difenzoquat, or the like;
Cyclic imide-based herbicides: flumiclorac-pentyl, fluthiacet-methyl, or the like;
Benzoylaminopropionic acid-based herbicides: benzoylprop-ethyl, furanprop-ethyl, or the like;
Other herbicides: isoxaben, ethofumesate, oxadiazon, piperophos, daimuron, bentazone, benfuresate, difenzo-quat, naproanilide, triazofenamide, quinclorac, clomazone, sulcotrione, cinmethylin, dithiopyr, pyrazolate, pyridate, flupoxam, and cyclohexanedione-based herbicides such as sethoxydim and tralkoxydim, or the like.

Synergists/antidotes: octachlorodipropyl ether, piperonyl butoxide, cyneprin, IBTA, benoxacor, cloquintocet-methyl, ciometranil, dichlormid, fenchlorazole-ethyl, fenclorim, flurazole, flaxofenimi, furilazole, mefenpyr-diethyl, MG191, naphthalic anhydride, oxabetrinil, or the like.

Antibacterial/antifungal/antialgal agents: trialkyltriamine, ethanol, isopropyl alcohol, propyl alcohol, trisnitro, chlorobutanol, pronopol, glutaraldehyde, formaldehyde, a-bromcinnamaldehyde, scane M-8, caisson CG, NS-500W, BIT, n-butyl BIT, allyl isothiocyanate, thiabendazole, methyl 2-benzimidazolyl carbamate, lauricidine, biovan, triclocarban, halocarban, glasisicar, benzoic acid, sorbic acid, caprylic acid, propionic acid, 10-undecylenic acid, potassium sorbate, potassium propionate, potassium benzoate, monomagnesium phthalate, zinc undecylenate, 8-hydroxyquinoline, copper quinoline, TMTD, triclosan, diclohelanilide, tolyfluanid, milt protein, egg white lysozyme, benthiazole, sodium carbam, triazine, tebuconazole, hinokithiol, tetrachloroisophthalonitrile, tectamer 38, chlorhexidine gluconate, chlorhexidine hydrochloride, polyhexamethylene biguanide, polybiguanide hydrochloride, danthoprom, clidant, sodium pyrithione, zinc pyrithione, densil, copper pyrithione, thymol, isopropyl methyl phenol, OPP, phenol, butyl paraben, ethyl paraben, methyl paraben, propyl paraben, metacresol, orthocresol, paracresol, sodium orthophenyl phenol, chlorophene, parachlorophenol, parachloromethaxylate, parachlorocresol, fluorfolpet, polylysine, biopan P-1487, Jote methylparatolylsulfone, polyvinylpyrrolidone parachloroisocyanel, hydrogen peroxide, stabilized chlorine dioxide, peracetic acid, copper naphthenate, novalon AG 300, silver chloride, titanium oxide, silver, zinc calcium phosphate, Silver Ace, silver zinc aluminosilicate, silver zinc zeolite, novalon AGZ330, phorone killer, dimer 136, benzalkonium chloride, didecyl dimethyl ammonium chloride, bardack 2250/80, benzotonium chloride, hyamine 3500J, cetylammonium bromide, cetrimide, CTAB, Cetavlon, Dimer-38, benzalkonium chloride, BARDAC^{®} 170P, DC-5700, cetyl pyridinium chloride, chitosan, deuron, DCMU, prepentol A6, CMI, 2C1-OIT, BCM, ZPT, BNP, OIT, IPBC, TCMSP, or the like.

It is preferable that the agricultural chemical active ingredient be at least one of the compounds having a solubility in water at 25°C of 100 ppm or more. This is because, releasing of the agricultural chemical active ingredient can be controlled even when using a compound having a comparatively high solubility in water (at 25°C) of 100 ppm or more, more preferably 500 ppm or more.

In the agricultural chemical-containing resin composition of the present invention, the agricultural chemical active ingredient is at least one of neonicotinoid-based compounds selected from the group consisting of nitenpyram, imidacloprid, acetamiprid, thiamethoxam, clothianidin, thiacloprid and dinotefuran.

Many of the neonicotinoid-based compounds have a solubility in water at 25°C of 100 ppm or more.

### (B-1) Resin

Examples of resin include a styrene-maleic anhydride-based copolymer, a polyolefin-based resin, a poly(meth)acrylate-based resin, a polystyrene-based resin, a polyester-based resin, a polyvinyl chloride-based resin, a polyvinylidene chloride resin, a polyamide resin, a polyacetal resin, a polycarbonate resin and a polyurethane resin. These resins can be used alone or in combination of two or more types thereof.

The resin used in the present invention is a styrene-maleic anhydride-based copolymer.

Examples of the styrene-maleic anhydride-based copolymer include derivatives that have been esterified by an alcohol, sulfonated by a sulfonating agent and imidized by an amine; and types resulting from additional neutralization of an esterified derivative. Particularly preferable examples thereof include styrene-maleic anhydride copolymers and their derivatives, which have been esterified by an alcohol. In addition, there are no particular limitations on the polymerization mode of the styrene-maleic anhydride copolymer, and any of those having a random form, a block form, or a graft form can be used.

Examples of the polyolefin-based resin include polyethylene resins such as low density polyethylene, medium density polyethylene, high density polyethylene, polyethylene wax, and ethylene-α-olein copolymer elastomers that are commonly used as resins for molding; and, an ethylene/vinyl acetate copolymer, an ethylene/(meth)acrylic acid copolymer, polypropylene, a propylene/ethylene copolymer, an ethylene/propylene copolymer, polybutene, and an ethylene/propylene/butadiene copolymer.

Examples of the poly(meth)acrylate-based resins include methyl methacrylate homopolymers; (meth)acrylate-based copolymers, in which ethylene, styrene, α-methylstyrene and acrylonitrile have been respectively copolymerized with an acrylic acid ester or a methacrylic acid ester; and impact resistant (meth)acrylic resins, in which butadiene, styrene or acrylonitrile has been copolymerized with a (meth)acrylic acid ester.

Examples of the polystyrene-based resins include styrene homopolymers that are commonly used as resins for molding, as well as high impact polystyrene (HIPS), a methyl methacrylate/butadiene/styrene copolymer, a styrene/maleic anhydride copolymer, a styrene/(meth)acrylic acid copolymer and a styrene/acrylonitrile copolymer.

Examples of the polyester-based resins include aromatic polyesters such as polyethylene terephthalate, polybutylene terephthalate and polyethylene naphthalate, and polyesters obtained by the condensation of diols and dicarboxylic acid that are used in resins for coating and so forth.

Of these, particularly preferable examples include an aliphatic polyester obtained by the condensation polymerization of an aliphatic diol and dicarboxylic acid. Examples thereof include biodegradable resins such as polyhydroxyalkanoate copolymers represented by 3-hydroxybutyrate/3-hydroxyvalerate copolymers, homopolymers composed solely of hydroxyalkanoate represented by polylactic acid, and copolymers of polycaprolactone or polylactic acid and polyester.

Among them, rosin derivatives or polymer derivatives having a repeating unit derived from salicylic acid are particularly preferable in consideration of compatibility with the agricultural chemical active ingredients and controllability of the release thereof. Rosin derivatives refer to abietic acid, which is the main component of pine resin, and its derivatives. Specific examples thereof include tall rosin, rosin-modified phenol and rosin-modified maleic acid.

The polymers having a repeating unit derived from salicylic acid or its derivatives may include other structures as a repeating unit as long as they contain salicylic acid or its derivatives as a repeating unit within the polymer. Specific examples thereof include polymers in which two or more molecules of salicylic acid, which composed of the same or of two or more different types, are condensed; and polymers in which salicylic acid and another hydroxycarboxylic acid are condensed. More specific examples include the linear polysalicylate produced by PROVIRON.

Among these resins, the combination of a styrene-maleic anhydride-based copolymer or its derivative and at least one resin selected from the group consisting of a polyolefin-based resin, a poly(meth)acrylate-based resin, a polystyrene-based resin, a polyester-based resin, a polyvinyl chloride-based resin, a polyvinylidene chloride resin, a polyamide resin, a polyacetal resin, a polycarbonate resin and a polyurethane resin is preferable. The combination of a styrene-maleic anhydride-based copolymer or its derivative and, rosin or its derivative, or salicylic acid or its derivative is particularly preferable.

When the combination of a styrene-maleic anhydride-based copolymer or its derivative and, rosin or its derivative, or salicylic acid or its derivative is used as a resin, mixing ratio of the two components is not particularly limited, although a range in which the content of styrene-maleic anhydride-based copolymer is 30 to 99% by weight and the content of a polymer having a repeating unit derived from rosin or its derivatives or from salicylic acid or its derivatives is 1 to 70% by weight is preferable and a range in which the content of the former component is 50 to 99% by weight and the content of the latter component is 1 to 50% by weight is more preferable.

### (B-2) (Meth)acrylate-based resin

The resin composition containing an agricultural chemical as previously described contains a (meth)acrylate-based resin as a resin component. Said (meth)acrylate-based resins can be used alone or in combination of two or more types thereof.

Examples of the (meth)acrylate-based resins include a homopolymer of a (meth)acrylate compound, a copolymer obtained from two or more types of (meth)acrylate compounds, and a copolymer obtained from a (meth)acrylate compound and another copolymerizable monomer. The term (meth)acrylate refers to either acrylate or methacrylate (the same applies hereinafter).

Specific examples of the (meth)acrylate compounds include alkyl (meth)acrylates such as methyl (meth)acrylate, ethyl (meth)acrylate, propyl (meth)acrylate, isopropyl (meth)acrylate, butyl (meth)acrylate, isobutyl (meth)acrylate, t-butyl (meth)acrylate, pentyl (meth)acrylate, amyl (meth)acrylate, isoamyl (meth)acrylate, hexyl (meth)acrylate, heptyl (meth)acrylate, octyl (meth)acrylate, isooctyl (meth)acrylate, 2-ethylhexyl (meth)acrylate, ethylhexyl (meth)acrylate, nonyl (meth)acrylate, decyl (meth)acrylate, isodecyl (methacrylate, undecyl (meth)acrylate, dodecyl(meth)acrylate, lauryl (meth)acrylate, stearyl (meth)acrylate, and isostearyl (meth)acrylate;

hydroxyalkyl (meth)acrylates such as 2-hydroxyethyl (meth)acrylate, 2-hydroxypropyl (meth)acrylate, 4-hydroxybutyl (meth)acrylate, 3-hydroxypropyl (meth)acrylate, 2-hydroxybutyl (meth)acrylate, and 3-hydroxybutyl (meth)acrylate;
phenoxyalkyl (meth)acrylates such as phenoxyethyl (meth)acrylate and 2-hydroxy-3-phenoxypropyl (meth)acrylate;
alkoxyalkyl (meth)acrylates such as 2-methoxyethyl (meth)acrylate, 2-ethoxyethyl (meth)acrylate, 2-propoxyethyl (meth)acrylate, 2-butoxyethyl (meth)acrylate, and 2-methoxybutyl (meth)acrylate;

polyalkylene glycol (meth)acrylates such as polyethylene glycol mono(meth)acrylate, ethoxydiethylene glycol (meth)acrylate, methoxypolyethylene glycol (meth)acrylate, phenoxypolyethylene glycol (meth)acrylate, nonylphenoxypolyethylene glycol (meth)acrylate, polypropylene glycol mono (meth)acrylate, methoxypolypropylene glycol (meth)acrylate, ethoxypolypropylene glycol (meth)acrylate, and nonylphenoxypolypropylene glycol (meth)acrylate;
cycloalkyl (meth)acrylates such as cyclohexyl (meth)acrylate, 4-butylcyclohexyl (meth)acrylate, dicyclopentanyl (meth)acrylate, dicyclopentenyl (meth)acrylate, dicyclopentadienyl (meth)acrylate, bornyl (meth)acrylate, isobornyl (meth)acrylate, and tricyclodecanyl (meth)acrylate;
benzyl (meth)acrylate, and tetrahydrofurfuryl (meth)acrylate.

The aforementioned another copolymerizable monomer is not particularly limited as long as it is copolymerizable with the abovementioned (meth)acrylate compounds. Examples thereof include unsaturated carboxylic acids such as (meth)acrylic acid, vinyl benzoate, maleic acid, and vinyl phthalic acid; and vinyl group-containing radical polymerizable compounds such as vinylbenzyl methyl ether, vinyl glycidyl ether, styrene, α-methylstyrene, butadiene, and isoprene.

The method for producing (meth)acrylate based resins is not particularly limited and a known method can be adopted. For example, the resins can be produced by polymerizing the aforementioned (meth)acrylate compounds or, if desired, copolymerizing the compounds with another copolymerizable monomer. The polymerization method is not particularly limited and examples thereof include the free radical polymerization method in which a radical polymerization initiator such as azobisisobutylonitrile (AIBN) is used.

Although weight average molecular weight of the (meth)acrylate based resin is not particularly limited, it is usually 15,000 to 400,000 and preferably 50,000 to 300,000. Molecular weight can be measured by gel permeation chromatography (GPC).

In addition, the agricultural chemical-containing resin composition may contain other resins in addition to the abovemetioned (meth)acrylate-based resin.

Examples of the other resins include a styrene-maleic anhydride-based copolymer, a polyolefin based resin, a polystyrene based resin, a polyester based resin, a polyvinyl chloride-based resin, a polyvinylidene chloride resin, a polyamide resin, a polyacetal resin, a polycarbonate resin and a polyurethane resin. These resins can be used alone or in combination of two or more types thereof.

### (C-1) Fatty acid metal salt

In the agricultural chemical-containing resin composition of the present invention, release of the agricultural chemical active ingredient is controlled by adding a fatty acid metal salt. In other words, by mixing a fatty acid metal salt, the amount of agricultural chemical active ingredient released from the composition, which is in a compatible state or forms a matrix, can be increased or reduced (control of releasability).

Although the fatty acid of the fatty acid metal salt used in the present invention is not particularly limited, it preferably has 10 or more carbon atoms and more preferably 10 to 20 carbon atoms. In addition, the fatty acid may be saturated or unsaturated.

Specific examples of the fatty acid include stearic acid, lauric acid, palmitic acid, oleic acid, myristic acid, linoleic acid, and linolenic acid.

In addition, examples of the metal in the fatty acid metal salt include alkali metals such as lithium, sodium, potassium; alkaline earth metals such as magnesium and calcium; and other metals such as aluminum, zinc, and manganese.

The metal salts of fatty acids can be produced by a conventionally known method such as the method to saponify fats and oils. Additionally, it is also possible to directly use a commercially available product.

In the agricultural chemical-containing resin composition of the present invention, it is preferable to further include at least one material selected from the group consisting of a water-soluble polymer, silicon oxide, a hydrocarbon-based lubricant, and a surfactant in addition to the aforementioned agricultural chemical active ingredient, the resin, and the fatty acid metal salt in order to achieve even more improved effects of release control.

Examples of the water-soluble polymers include naturally occurring water-soluble polymers such as starch and gelatin; semisynthetic cellulose derivatives such as carboxymethyl cellulose, methyl cellulose and hydroxypropyl cellulose; and synthetic water-soluble polymers such as polyvinyl alcohol, polyacrylic acid based-polymers, polyacrylamide and polyethylene glycol.

Examples of the silicon oxide include white carbon. More specific examples thereof include ordinary white carbon and hydrophobic silicon dioxide.

White carbon refers to the generic term for amorphous silicon dioxide composed of SiO₂, and it is classified into precipitation method silica and fumed silica depending on the differences in the production process. Baked white carbon refers to white carbon in which the surface silanol groups have been made hydrophobic by treating ordinary white carbon at a high temperature.

The hydrophobic silicon dioxide is silicon oxide in which hydrophilic silanol groups (Si-OH) on the surface thereof are subjected to a hydrophobic treatment by a chemical modification treatment, a heat treatment, or the like. In this case, the hydrophobic treatment may be conducted at least on the surface of the silicon oxide, and although all of the silanol groups inside the silicon oxide may be hydrophobically treated, preferably only the silanol groups on the surface are hydrophobically treated.

There are no particular limitations on the method of hydrophobic treatment and specific examples thereof include a hydrophobic treatment using silicone oil and alkylation treatment of the silanol groups in which alkyl groups having 1 to 30 carbon atoms are preferable. Specific examples of the hydrophobic groups on the surface include (CH₃)₃Si-, (CH₃)₂Si-, (-Si(CH₃)₂-O-)ₙ, and C₈H₁₇Si-.

The hydrophobic silicon dioxide obtained as described above is preferably extremely fine amorphous particles whose primary particles have an average particle size of 0.5 to 100 nm.

Specific examples of hydrophobic silicon dioxide include baked white carbon and hydrophobic white carbon, and more specific examples include products such as Sipernat D17 (manufactured by Degussa, registered trademark) and Aerosil R972 (manufactured by Aerosil, registered trademark).

Among them, use of hydrophobic white carbon is particularly preferable since hydrophobic white carbon controls releasability of agricultural chemical active ingredients and it can also be dispersed uniformly in a solvent in the production by the solvent method described later, thereby avoiding the segregation thereof due to the aggregation and sedimentation processes.

Examples of the hydrocarbon-based lubricant include liquid paraffin, natural paraffin, microwax, polyethylene wax, polypropylene wax, a chlorinated hydrocarbon, a fluorocarbon, microcrystalline wax, and Fischer-Tropsch wax. These hydrocarbon-based lubricants can be used alone or in combination of two or more types thereof.

Examples of nonionic surfactants include sugar ester-type surfactants such as sorbitan fatty acid esters ( C₁₂₋₁₈), POE sorbitan fatty acid esters (C₁₂₋₁₈) and sucrose fatty acid esters; fatty acid ester-type surfactants such as POE fatty acid esters (C₁₂₋₁₈), POE resin acid esters and POE resin acid diesters(C₁₂₋₁₈); alcohol-type surfactants such as POE alkyl ethers (C₁₂₋₁₈); alkyl phenol-type surfactants such as POE alkyl (C₈₋₁₂) phenyl ethers, POE dialkyl (C₈₋₁₂) phenyl ethers and POE alkyl (C₈₋₁₂) phenyl ether formaldehyde condensation products; polyoxyethylene/polyoxypropylene block polymer-type surfactants such as polyoxyethylene/polyoxypropylene block polymers and alkyl (C₁₂₋₁₈) polyoxyethylene/polyoxypropylene block polymer ethers; alkylamine-type surfactants such as POE alkylamines (C₁₂₋₁₈) and POE fatty acid amides (C₁₂₋₁₈); bisphenol-type surfactants such as POE fatty acid bisphenol ethers; polyaromatic ring-type surfactants such as POA benzyl phenyl (or phenyl phenyl)ethers and POA styryl phenyl (or phenyl phenyl) ethers; silicon based and fluorine based surfactants such as POE ether and ester-type silicon and fluorine based surfactants; and vegetable oil-type surfactants such as POE castor oil and POE hardened castor oil.

Examples of anionic surfactants include sulfate-type surfactants such as alkyl sulfates (C₁₂₋₁₈, Na, NH₄, alkanolamine), POE alkyl ether sulfates (C₁₂₋₁₈, Na, NH₄, alkanolamine), POE alkyl phenyl ether sulfates (C₁₂₋₁₈, NH₄, alkanolamine, Ca), POE benzyl (or styryl) phenyl (or phenyl phenyl) ether sulfates (Na, NH4, alkanolamine), and polyoxyethylene and polyoxypropylene block polymer sulfates (Na, NH₄, alkanolamine); sulfonate-type surfactants such as paraffin (alkane) sulfonates (C₁₂₋₂₂, Na, Ca, alkanolamine), AOS (C₁₄₋₁₆, Na, alkanolamine), dialkyl sulfosuccinates (C₈₋₁₂, Na, Ca, Mg), alkyl benzene sulfonates (C₁₂, Na, Ca, Mg, NH₄, alkylamine, alkanolamine, cyclohexylamine), mono- or dialkyl (C₃₋₆) naphthalene sulfonates (Na, PH₄, alkanolamine, Ca, Mg), naphthalene sulfonate/formalin condensation products (Na, PH₄), alkyl (C₈₋₁₂) diphenyl ether disulfonates (Na, NH₄), lignin sulfonates (Na, Ca), POE alkyl (C₈₋₁₂) phenyl ether sulfonates (Na), and POE alkyl (C₁₂₋₁₈) ether sulfosuccinic acid half esters (Na); POE alkyl (C₁₂₋₁₈) ether phosphates (Na, alkanolamine) such as carboxylic acid-type fatty acid salts (C₁₂₋₁₈, Na, K, NH₄, alkanolamine), N-methyl-fatty acid sarcosinates (C₁₂₋₁₈, Na) and resin acid salts (Na, K); and phosphate-type surfactants such as POE mono- or dialkyl (C₈₋₁₂) phenyl ether phosphates (Na, alkanolamine), POE benzylated (or styrylated) phenyl (or phenyl phenyl)ether phosphates (Na, alkanolamine), polyoxyethylene/polyoxypropylene block polymers (Na, alkanolamine), phosphatidylcholine/phosphatidylethanolamine (lecithin), and alkyl (C₈₋₁₂) phosphates.

Examples of cationic surfactants include ammonium-type surfactants such as alkyltrimethylammonium chlorides (C₁₂₋₁₈), methyl-polyoxyethylene-alkyl ammonium chlorides (C₁₂₋₁₈), alkyl-N-methylpyridinium bromides (C₁₂₋₁₈), mono- or dialkyl (C₁₂₋₁₈) methylated ammonium chlorides, and alkyl (C₁₂₋₁₈) pentamethyl propylene diamine dichlorides; and benzalkonium-type surfactants such as alkyl dimethyl benzalkonium chlorides (C₁₂₋₁₈) and benzethonium chlorides (octyl phenoxy ethoxy ethyl dimethyl benzyl ammonium chlorides).

Examples of amphoteric surfactants include betaine-type surfactants such as dialkyl (C₈₋₁₂) diamino ethyl betaines and alkyl (C₁₂₋₁₈) dimethyl benzyl betaines; and glycine-type surfactants such as dialkyl (C₈₋₁₂) diamino ethyl glycines and alkyl (C₁₂₋₁₈) dimethyl benzyl glycines. These surfactants can be used alone or in combination of two or more types thereof.

### (C-2) Release controlling agent

The release controlling agent is a substance which facilitates or suppresses the release of agricultural chemical active ingredient from the composition, which is in a compatible state or forms a matrix, thereby enabling the control of releasability.

Examples of the release controlling agent include at least one material selected from a water-soluble polymer, silicon oxide, a hydrocarbon based lubricant, and a surfactant.

For the above water-soluble polymer, silicon oxide, a hydrocarbon-based lubricant, and a surfactant, the water-soluble polymers, the silicon oxides, the hydrocarbon based lubricants, and the surfactants which have been described earlier can be used.

Inorganic salts such as calcium carbonate, potassium chloride and sodium sulfate; organic acids such as citric acid, malic acid, fumaric acid, and stearic acid and the salts thereof; sugars such as lactose and sucrose; inorganic additives such as alumina powder, silica gel, zeolite, hydroxyapatite, zirconium phosphate, titanium phosphate, titanium oxide, zinc oxide, hydrotalcite, kaolinite, montmorillonite, talc, and clay; antioxidants such as n-propyl gallate and butylhydroxyanisole; pH adjusters and buffering agents such as sodium tripolyphosphate, sodium dihydrogen phosphate and ammonium phosphate; colorants such as Food Blue No. 1, methylene blue and pigment red 48, as well as antiseptics, lubricants, ultraviolet absorbers and antistatic agents can be added, when necessary, to the agricultural chemical-containing resin composition of the present invention (hereinafter, the water-soluble polymer, the silicon oxide, the hydrocarbon-based lubricant, and the surfactant which have been described earlier as well as the above additives may collectively be referred to as "other components").

The agricultural chemical-containing resin composition of the present invention is as defined in the attached set of claims and is a composition containing the abovementioned agricultural chemical active ingredient (A), the resin (B-1), and the fatty acid metal salt (C-1), and characterized in that the composition is either in a compatible state or forming a matrix.

It is described agricultural chemical-containing resin composition which is a composition containing an agricultural chemical active ingredient (A), a (meth)acrylate-based resin (B-2), and a release controlling agent (C-2), and characterized in that the composition is either in a compatible state or forms a matrix. Due to the composition being in a compatible state or forming a matrix, release of the agricultural chemical active ingredient can be controlled by changing the types and the added amount of the release controlling agent where appropriate.

The expressions "compatible state" and "matrix" refer to a state in which an agricultural chemical active ingredient is dissolved or dispersed in a non-discontinuous (i.e., continuous phase), poorly water-soluble resin.

In the agricultural chemical-containing resin composition of the present invention, blending ratio of the respective components is not particularly limited and can be set arbitrarily in order to optimize the controlled release of agricultural chemical active ingredients. However, the range where the content of the agricultural chemical active ingredient (A) is 1% by weight to 80% by weight, the content of the resin (B-1) is 19% by weight to 98% by weight, and the content of the fatty acid metal salt (C-1) is 1% by weight to 80% by weight with respect to the entire composition is preferable, and the range where the content of the agricultural chemical active ingredient (A) is 10% by weight to 50% by weight, the content of the resin (B-1) is 45% by weight to 85% by weight, and the content of the fatty acid metal salt (C-1) is 5% by weight to 50% by weight is more preferable.

In the agricultural chemical-containing resin composition as previously described although the blending ratio of the respective components is not particularly limited and can be set arbitrarily in order to optimize the controlled release of agricultural chemical active ingredients, the range where the content of the agricultural chemical active ingredient (A) is 1% by weight to 80% by weight, the content of the (meth)acrylate-based resin (B-2) is 19% by weight to 98% by weight, and the content of the release controlling agent(C-2) is 1 % by weight to 80% by weight with respect to the entire composition is preferable, and the range where the content of the agricultural chemical active ingredient (A) is 10% by weight to 50% by weight, the content of the (meth)acrylate based resin (B-2) is 45% by weight to 85% by weight, and the content of the release controlling agent (C-2) is 5% by weight to 50% by weight is more preferable.

### 2) Method for producing resin composition containing agricultural chemical

The method of the present invention for producing a resin composition containing agricultural chemical is characterized by having any one of the following steps: (i) mixing, melting by heating, and kneading the agricultural chemical active ingredient, the resin, and the fatty acid metal salt together with other components if desired (hereinafter may be referred to as "fatty acid metal salt and the like") and cooling the resultant (hereinafter may be referred to as the "melting method"); (ii) dissolving, homogenizing, and/or mixing the agricultural chemical active ingredient, the resin, and the fatty acid metal salt and the like in an organic solvent followed by the removal of the organic solvent by distillation (hereinafter may be referred to as the "solvent method"); and (iii) dissolving, homogenizing, and/or mixing the agricultural chemical active ingredient in an aqueous alkaline solution of a resin and making the resultant into an acidic slurry followed by filtration and drying (hereinafter may be referred to as the "pH precipitation method").

The method for producing resin composition containing agricultural chemical as previously described is characterized by including the steps of (I) mixing, melting by heating, and kneading the agricultural chemical active ingredient, the (meth)acrylate-based resin, and the release controlling agent together with other components if desired (hereinafter the release controlling agent and other components added if desired may collective be referred to as "release controlling agent and the like") and cooling the resultant (hereinafter may be referred to as the "melting method"); (II) dissolving, homogenizing, and/or mixing the agricultural chemical active ingredient, the resin, and the release controlling agent and the like in an organic solvent followed by the removal of the organic solvent by distillation (hereinafter may be referred to as the "solvent method"); or (III) dissolving, homogenizing, and/or mixing the agricultural chemical active ingredient and the release controlling agent and the like in an aqueous alkaline solution of a resin and making the resultant into an acidic slurry followed by filtration and drying (hereinafter may be referred to as the "pH precipitation method").

### (i) Melting method

Examples of the melting methods include a method having the steps of placing a resin in a kneader and melting it by heating, and thereafter adding an agricultural chemical active ingredient and a fatty acid metal salt and the like thereto and melting and kneading them, extruding the resultant with a single screw or double screw extruder and forming pellets with a pelletizer, pulverizing the obtained pellets, and then placing the resultant in a grinder to form fine particles; and a method in which a mixture of an agricultural chemical active ingredient, a resin and a fatty acid metal salt and the like is melted by heating and is kneaded in a continuous heating kneader, and the kneaded product obtained is cooled and crushed followed by placing the resultant in a grinder to form fine particles.

There are no particular limitations on the melting temperature in the melting method as long as the agricultural chemical active ingredient does not decompose and becomes sufficiently compatible or mixes uniformly with the resin. In addition, in the melting method, it is desirable to produce the agricultural chemical-containing resin composition in a short period of time and use as low a temperature as possible to heat and melt the resin to avoid decomposition of the agricultural chemical active ingredient by heat. However, there are cases where it is difficult to obtain a resin which is in a compatible state or a uniformly mixed state even when stirred adequately due to the increased viscosity at low temperatures, while the addition of a surfactant will result in the achievement of a uniform composition at times even in a highly viscous state.

### (ii) Solvent method

Examples of the solvent methods include a method having the steps of placing a solvent in a container that allows the removal of solvent by distillation under reduced pressure, adding a resin and an agricultural chemical active ingredient thereto, completely dissolving the resin and the agricultural chemical active ingredient by heating and stirring, adding the fatty acid metal salt and the like to disperse or dissolve therein, completely removing the solvent by distillation due to heating and concentrating under reduced pressure, and placing the obtained powder in a grinder to form fine particles.

Another example of the solvent method is a method having the steps of placing a solvent in a container that allows the removal of solvent by distillation under reduced pressure, adding a resin and an agricultural chemical active ingredient thereto, completely dissolving the resin and the agricultural chemical active ingredient by heating and stirring, adding the release controlling agent and the like to disperse or dissolve therein, completely removing the solvent by distillation due to heating and concentrating under reduced pressure, and placing the obtained powder in a grinder to form fine particles.

The solvent used in the solvent method is not particularly limited as long as it dissolves the resin and the active ingredient of agricultural chemicals and is being stable. Examples thereof include aromatic or aliphatic hydrocarbons such as xylene, toluene, alkyl naphthalene, phenylxylylethane, kerosene, gas oil, hexane and cyclohexane; halogenated hydrocarbons such as chlorobenzene, dichloromethane, dichloroethane and trichloroethane; alcohols such as methanol, ethanol, isopropyl alcohol, butanol, hexanol and ethylene glycol; ethers such as diethyl ether, ethylene glycol dimethyl ether, tetrahydrofuran and dioxane; esters such as ethyl acetate and butyl acetate; ketones such as acetone, methyl ethyl ketone, methyl isobutyl ketone and cyclohexanone; nitriles such as acetonitrile and isobutyronitrile; acid amides such as dimethylsulfoxide, N,N-dimethylformamide and N,N-dimethylacetamide; and vegetable oils such as soybean oil and cottonseed oil. Among them, dichloromethane, acetone, methanol, and the like are particularly preferable.

Although there are no particular limitations on the mixing ratio of the solvent and the resin as long as the amount of solvent is able to dissolve the agricultural chemical active ingredient and the resin, it is preferably within a range of 10 to 20% by weight. It is desirable to dissolve using as little solvent as possible since costs are not wasted on removing the solvent by distillation. However, there are cases where it is difficult to obtain a resin which is in a compatible state or a uniformly mixed state by stirring due to the increased viscosity when the amount of solvent is small, while the addition of a surfactant will result in the achievement of a uniform composition at times even in a highly viscous state. The temperature at which the agricultural chemical active ingredient and the resin are dissolved is preferably 20 to 40°C to maintain the stability of the agricultural chemical active ingredient.

Although an ordinary method can be used as a method to remove the solvent by distillation, specific examples of the method include a vacuum distillation method, a heat distillation method and a vacuum heat distillation method. In addition, a method in which a second solvent where the resin and the agricultural chemical active ingredient are insoluble is added and the precipitated solid matter is filtered, and a method in which a spray drying granulator can also be used.

In the melting method and the solvent method, the order in which the agricultural chemical active ingredient, the resin and the fatty acid metal salt and the like are melted or dissolved may be simultaneous or in any order. Moreover, they may be melted or dissolved on several separate occasions, and the melting method and the solvent method may also be used in combination depending on the composition.

In addition, the order in which the agricultural chemical active ingredient, the resin and the release controlling agent and the like are melted or dissolved may be simultaneous or in any order. Moreover, they may be melted or dissolved on several separate occasions, and the melting method and the solvent method may also be used in combination depending on the composition.

### (iii) pH precipitation method

Examples of the pH precipitation method include a method having the following steps: that is, completely dissolving a resin in an ammonium solution, adding and dispersing an agricultural chemical active ingredient and other components if desired, adding hydrochloric acid to form an acidic slurry, thereby obtaining precipitates, filtrating and drying the resulting precipitates to achieve a powdered material, adding a fatty acid metal salt to this powdered material and kneading them, and placing the obtained kneaded product in a grinder to form fine particles.

Another example of the pH precipitation method is a method having the following steps: that is, completely dissolving a resin and an agricultural chemical active ingredient in an ammonium solution, adding and dispersing a release controlling agent and the like, adding hydrochloric acid to form an acidic slurry, thereby obtaining precipitates, filtrating and drying the resulting precipitates, and placing the obtained powder in a grinder to form fine particles.

As the method for crushing and pulverizing the obtained composition (powder), a method in which a pulverizer used for extrusion-molded granules is employed, or a method in which a pin mill or a jet mill crusher used for wettable powders is employed can be adopted for the agricultural chemical-containing resin compositions produced by any types of methods. Additionally, in the case of producing an agricultural chemical-containing resin composition using the solvent method, removal of the solvent by distillation and formation of fine particles can also be carried out simultaneously by using a spray drying granulator in addition to the methods described above.

In addition, in the present invention, the agricultural chemical-containing resin composition can also be produced by polymerizing monomers (or prepolymers) in the presence of an agricultural chemical active ingredient, a fatty acid metal salt, and the like. Although the polymerization method is not particularly limited, a suspension polymerization method is preferable since the agricultural chemical-containing resin composition having a desired particle size can be readily obtained.

The suspension polymerization method is a method in which polymerization is carried out by first dispersing, in a medium such as water, a monomer, which is insoluble in the medium, to suspend in the presence of a suspension stabilizer, and then adding a polymerization initiator which is soluble in the monomer to this suspension.

Examples of the suspension stabilizer to be used include water-soluble polymers such as polyvinyl alcohol, methyl cellulose, ethyl cellulose, hydroxyethyl cellulose, hydroxypropyl cellulose, carboxymethyl cellulose, polyvinylpyrrolidone, polyethylene glycol, polyacrylamide, gelatin, polyacrylic acid, and polyacrylic acid salts; and inorganic suspension stabilizers such as calcium phosphate and calcium carbonate.

The monomer used can be selected appropriately depending on the types of resin to be produced. When one type of monomer is used, a homopolymer can be obtained. When the combination of two or more types of monomers is used, a copolymer can be obtained.

Examples of the polymerization initiator to be used include peroxides such as benzoyl peroxide, butyl peroxide, methyl ethyl ketone peroxide, methyl isobutyl peroxide, cumene hydroperoxide, and lauroyl peroxide; and azo compounds such as 2,2'-azobis(2,4-dimethylvaleronitrile), 2,2'-azobis(2-methylpropionitrile), 2,2'-azobis(2-methylbutylonitrile), and 2,2'-azobis(4-methoxy-2,4-dimethylvaleronitrile). However, the polymerization initiator is not limited to these examples. These radical polymerization initiators can be used alone or in combination of two or more types thereof.

The agricultural chemical-containing resin composition of the present invention can be produced by the following procedures. When using 100 parts by weight of a mixture of an agricultural chemical active ingredient, a monomer, and a fatty acid metal salt, 0.1 to 20 parts by weight of a suspension stabilizer is dissolved or dispersed with respect to 200 to 800 parts by weight of water. 100 parts by weight of the abovementioned mixture is loaded to this dissolved or dispersed liquid and the resultant is stirred while adjusing the stirring rate so that the dispersed particles will have a predetermined particle size. After conducting the adjustment of particle size, the temperature of liquid is increased up to 30 to 90°C and the reaction is carried out for 1 to 8 hours.

After the reaction is completed, the intended resin composition containing an agricultural chemical which is in a particulate state can be isolated from the reaction liquid. It should be noted that it is also possible to treat the suspension using reagents and so forth of enzymes and the like (for example, a cellulolytic enzyme and a polyvinyl alcohol degrading enzyme that decompose suspension stabilizers) in order to reduce the viscosity of the suspension and thereby making the solid-liquid separation process easy, and also to make the washing of resin particles easy.

In addition, by adjusting the rotational frequency of the stirring bar before the suspension polymerization reaction, particle size of the obtained composition particles can be changed. In general, when comparing the suspension systems with the same viscosity, resin particles having a relatively large particle size are obtained when the rotational frequency of the stirring bar is reduced, and resin particles having a relatively small particle size are obtained when the rotational frequency of the stirring bar is increased.

### 3) Agricultural chemical formulation

The agricultural chemical formulation of the present invention is formed from at least one of the agricultural chemical-containing resin compositions of the present invention.

It is preferable that the agricultural chemical formulation of the present invention contain at least one agricultural chemical-containing resin composition, which is a composition containing an agricultural chemical active ingredient (A), a resin (B-1), and a fatty acid metal salt (C-1) and which is formed from a particulate matter in a compatible state or forming a matrix and whose average particle size is within the range of 1 to 100 µm and be used as a seed treating agent, soil treating agent, or foliage treating agent.

It is preferable that the agricultural chemical formulation as previously described contains at least one agricultural chemical-containing resin composition, which is a composition containing an agricultural chemical active ingredient (A), a (meth)acrylate-based resin (B-2), and a release controlling agent (C-2) and which is formed from a particulate matter in a compatible state or forming a matrix and whose average particle size is 200 µm or less, and be used as a seed treating agent, soil treating agent, or foliage treating agent.

Average particle size of the agricultural chemical formulation varies depends on the intended use and is not particularly limited. However, the average particle size is preferably within a range of 200 µm or less and particularly preferably within a range of 1 to 100 µm when used as a formulation base, a seed dressing, or a powder material. In addition, the release rate of the agricultural chemical active ingredient can be adjusted by using two or more types of the agricultural chemical formulation having different particle sizes and compositions in combination.

There are no particular limitations on the agricultural chemical formulation (active ingredient) that can be used in mixed formulations, tank mixtures, and systematic treatments as long as they are registered agricultural chemicals, and specific examples thereof include the same agricultural chemical formulations described earlier.

In addition, in the case where the agricultural chemical active ingredients become unstable upon contact, or the case where agricultural chemical active ingredients having considerable differences in physical properties are mixed into a formulation, it is possible to produce a mixed formulation, which is usually considered to be difficult to produce, by first preparing a formulation for each agricultural chemical active ingredient by the method of the present invention and then mixing the resulting formulations to form a mixed formulation.

Inorganic salts such as calcium carbonate, potassium chloride and sodium sulfate; organic acids such as citric acid, malic acid, fumaric acid, and stearic acid and the salts thereof; sugars such as lactose and sucrose; inorganic additives such as alumina powder, silica gel, zeolite, hydroxyapatite, zirconium phosphate, titanium phosphate, titanium oxide, zinc oxide, hydrotalcite, kaolinite, montmorillonite, talc, and clay; antioxidants such as n-propyl gallate and butylhydroxyanisole; pH adjusters and buffering agents such as sodium tripolyphosphate, sodium dihydrogen phosphate and ammonium phosphate; colorants such as Food Blue No. 1, methylene blue and pigment red 48, as well as antiseptics, lubricants, ultraviolet absorbers and antistatic agents can be added, when necessary, to the agricultural chemical formulation of the present invention.

It is preferable that the agricultural chemical formulation of the present invention contain at least one of the agricultural chemical-containing resin compositions of the present invention and at least one agricultural chemical active ingredient different from the agricultural chemical active ingredient contained in the composition.

Although the additional agricultural chemical active ingredient is not particularly limited, preferable examples thereof include pyrethroid based compounds.

Examples of the pyrethroid compounds (pyrethroid insecticides) include acrinathrin, allethrin, Bioallethrin, barthrin, bifenthrin, Bioethanomethrin, Cyclethrin, cycloprothrin, cyfluthrin, beta-cyfluthrin, cyhalothrin, gamma-cyhalothrin, lambda-cyhalothrin, cypermethrin, alpha-cypermethrin, beta-cypermethrin, theta-cypermethrin, zeta-cypermethrin, cyphenothrin, deltamethrin, Dimefluthrin, dimethrin, Empenthrin, fenfluthrin, fenpirithrin, fenpropathrin, fenvalerate, Esfenvalerate, fluvalinate, taufluvalinate, furethrin, imiprothrin, Metofluthrin, permethrin, Biopermethrin, transpermethrin, phenothrin, prallethrin, Profluthrin, pyresmethrin, resmethrin, bioresmethrin, cismethrin, Tefluthrin, terallethrin, Tetramethrin, tralomethrin, transfluthrin, Etofenprox (2-(4- ethoxyphenyl)-2-methylpropyl 3-phenoxybenzyl ether), flufenprox, halfenprox, Protrifenbute and Silafluofen. These compounds can be used alone or in combination of two or more types thereof.

Moreover, in the agricultural chemical formulation of the present invention, it is preferable that the agricultural chemical active ingredient be at least one of the compounds having a solubility in water at 25°C of 100 ppm or more, and the compound is at least one of the neonicotinoid-based compounds. Examples of the neonicotinoid based compounds are the same as those described earlier.

Examples of the form adopted by the agricultural chemical formulation of the present invention include those usually known in the ordinary agricultural chemical formulations such as powder materials, powder and granular materials, granules, smoking agents, pastes, wettable powders, granular wettable powders, tablets, and flowable formulations which can be produced by using the agricultural chemical-containing resin composition of the present invention as a base material.

Such agricultural chemical formulations can be produced by the production method used in the production of common agricultural chemical formulations. Specific examples of the production method include a method in which a formulation base material such as a surfactant or a carrier is added to an agricultural chemical-containing resin composition before the composition is subjected to pulverizing and crushing which is followed by pulverizing, crushing and granulation.

The agricultural chemical formulation of the present invention is capable of treating both arable land and non-arable land. The formulation can be used as a seed treating agent applied to seed potatoes and the like by a spraying treatment, a dressing treatment, spray coating, an immersion treatment or the like; as a foliage treating agent applied by a sprinkling treatment, a top dressing treatment, or the like; as a soil treating agent applied by a surface sprinkling treatment, a soil incorporation treatment, a soil drenching treatment, a soil fumigation treatment, a planting hole treatment, a plant foot treatment, a row treatment, a seeding furrow treatment, a seedling box treatment, a seedling pot treatment, or the like; as a paddy treating agent applied by granule application, jumbo granule application, flowable application, or the like; and as other treating agents applied by a fumigation treatment, a lawn treatment, or the like.

Among these, the agricultural chemical formulation of the present invention is preferably used as a seed treating agent or soil treating agent as described later.

### 4) Treatment method and plant seed

The treatment method of the present invention is characterized by using a composition containing at least one of the agricultural chemical formulations of the present invention as well as at least one additional agricultural chemical active ingredient different from that contained in the agricultural chemical formulations to carry out a seed treatment or a soil treatment simultaneously or on separate occasions.

In the treatment method of the present invention, the additional agricultural chemical active ingredient is preferably a pyrethroid based compound.

Examples of the methods for seed treatment include a method in which the agricultural chemical formulation of the present invention is dissolved and dispersed in a sticker solution (i.e., a solution in which a water-soluble polymer such as polyvinyl alcohol (PVA) or carboxymethyl cellulose (CMC) and a dye or the like to serve as a marker for chemical treatment are dissolved in water so as to facilitate adhesion during seed treatment), and this solution or dispersed liquid is mixed with the crop seeds and then dried to prepare seeds to which the chemical is uniformly adhered.

When the plant seeds obtained by the treatment described above are normally planted in soil, the chemical absorbed through the seeds themselves or through the roots that have sprouted from the seeds spreads throughout the entire plant, thereby protecting the plant from diseases and pests.

Examples of the methods for soil treatment include a method in which seeding or planting is carried out normally and then treating with a formulation diluted with water with an applicator or a watering pot from above either before or after covering with soil, and a method in which young seedlings grown in seedling boxes or seedling cells are treated with a formulation diluted with water using an applicator or a watering pot. When the treatment is carried out by using these methods, the chemical is absorbed from the roots of a germinated plant thereby protecting the crop from diseases and pests in the same manner as in the seed treatment.

### 5) Formulation containing agricultural chemical

The agricultural chemical-containing formulation of the present invention is formed from at least one of the agricultural chemical-containing resin compositions of the present invention or a composition containing at least one of the agricultural chemical-containing resin compositions of the present invention and at least one additional agricultural chemical active ingredient different from the agricultural chemical active ingredient contained in the composition, and is characterized by being used in one of the applications selected from the group consisting of pharmaceuticals, veterinary medicines, food preservatives, and biocides.

The agricultural chemical-containing formulation of the present invention is preferably used in one of the applications selected from the group consisting of soil pest control agents, termite control agents, clothing agents, pest control agents, wood pest control agents, bait agents, animal ectoparasite control agents, sanitary pest control agents, domestic communicable disease control agents, ship bottom coatings, algicides for the fishing nets and the like, and mildewproofing agents for wood and the like.

Moreover, it is preferable that the additional agricultural chemical active ingredient be a pyrethroid-based compound. Preferable examples of the pyrethroid-based compounds are the same as those described earlier.

### [Examples]

The present invention will be described in further detail using Examples below. However, the scope of the present invention is not limited to the following Examples.

### (Example 1)

100 g of acetamiprid, 350 g of a styrene-maleic anhydride copolymer (trade name: SMA17352; weight average molecular weight: 7,000; manufactured by Sartomer Company Inc.) and 50 g of zinc stearate were mixed well in a plastic bag.

This mixture was then melted by heating, and kneaded in a continuous heating kneader (Model: KRC Kneader S-1 manufactured by Kurimoto Ltd.) whose body temperature was controlled between 60°C and 80°C, and the obtained kneaded product was crushed using a food cutter. 0.5 g of sodium lignin sulfonate (trade name: NEWKALGEN RX-B, produced by Takemoto Oil & Fat Co., Ltd.) and 0.5 g of sodium alkylnaphthalene sulfonate (trade name: NEWKALGEN BX-C, produced by Takemoto Oil & Fat Co., Ltd.) were added to 49 g of this crushed product and they were mixed well in a plastic bag. The obtained mixture was ground using a pin mill to achieve a wettable powder containing a composition of fine particles having an average particle size of 11 µm. It should be noted that the average particle size (volume average particle size) of the present invention is the result measured by using a particle size measuring apparatus (Model: MicroTrack 9320-X-100, manufactured by Nikkiso Co., Ltd.).

### (Example 2)

A wettable powder containing a composition of fine particles having an average particle size of 10 µm was obtained by carrying out the same method as that used in Example 1 except that calcium stearate was added instead of zinc stearate.

### (Example 3)

A wettable powder containing a composition of fine particles having an average particle size of 10 µm was obtained by carrying out the same method as that used in Example 1 except that the amount of styrene-maleic anhydride copolymer added was changed from 350 g to 390 g, and 10 g of calcium stearate was added instead of 50 g of zinc stearate.

### (Example 4)

A wettable powder containing a composition of fine particles having an average particle size of 9 µm was obtained by carrying out the same method as that used in Example 1 except that the amount of styrene-maleic anhydride copolymer added was changed from 350 g to 375 g, and 25 g of magnesium stearate was added instead of 50 g of zinc stearate.

### (Example 5)

A wettable powder containing a composition of fine particles having an average particle size of 11 µm was obtained by carrying out the same method as that used in Example 4 except that aluminum stearate was added instead of magnesium stearate.

### (Example 6)

A wettable powder containing a composition of fine particles having an average particle size of 10 µm was obtained by carrying out the same method as that used in Example 4 except that sodium stearate was added instead of magnesium stearate.

### (Example 7)

A wettable powder containing a composition of fine particles having an average particle size of 10 µm was obtained by carrying out the same method as that used in Example 1 except that 25 g of calcium stearate and 25 g of microcrystalline wax (trade name: LUVAX-2191 manufactured by Nippon Seiro Co., Ltd.) were added instead of 50 g of zinc stearate.

### (Example 8)

A wettable powder containing a composition of fine particles having an average particle size of 11 µm was obtained by carrying out the same method as that used in Example 7 except that the amount of styrene-maleic anhydride copolymer added was changed from 354 g to 375 g, and 10 g of calcium stearate and 15 g of microcrystalline wax were added instead of 50 g of zinc stearate.

### (Example 9)

A wettable powder containing a composition of fine particles having an average particle size of 10 µm was obtained by carrying out the same method as that used in Example 1 except that the amount of styrene-maleic anhydride copolymer added was changed from 350 g to 374 g, and 1 g of calcium stearate and 25 g of hydrophobic white carbon (trade name: Sipernat D-17 manufactured by Degussa) were added instead of 50 g of zinc stearate.

### (Example 10)

A wettable powder containing a composition of fine particles having an average particle size of 9 µm was obtained by carrying out the same method as that used in Example 8 except that paraffin wax (trade name: FT-100 manufactured by Nippon Seiro Co., Ltd.) was added instead of microcrystalline wax.

### (Example 11)

A wettable powder containing a composition of fine particles having an average particle size of 10 µm was obtained by carrying out the same method as that used in Example 10 except that the amount of styrene-maleic anhydride copolymer added was changed from 375 g to 394 g, the amount of calcium stearate added was changed from 10 g to 1 g, and the amount of paraffin wax added was changed from 15 g to 5 g.

### (Comparative Example 1)

A wettable powder containing a composition of fine particles having an average particle size of 14 µm was obtained by carrying out the same method as that used in Example 1 except that the amount of acetamiprid added was changed from 100 g to 75 g, the amount of styrene-maleic anhydride copolymer added was changed from 350 g to 425 g, and the amount of zinc stearate added was changed from 50 g to null.

### (Comparative Example 2)

A wettable powder containing a composition of fine particles having an average particle size of 16 µm was obtained by carrying out the same method as that used in Comparative Example 1 except that the amount of acetamiprid added was changed from 75 g to 100 g, and the amount of styrene-maleic anhydride copolymer added was changed from 425 g to 400 g.

### (Comparative Example 3)

A wettable powder containing a composition of fine particles having an average particle size of 15 µm was obtained by carrying out the same method as that used in Comparative Example 1 except that the amount of acetamiprid added was changed from 75 g to 150 g, and the amount of styrene-maleic anhydride copolymer added was changed from 425 g to 350 g.

### (Comparative Example 4)

72.3 g of acetamiprid, 2.5 g of sodium lignin sulfonate (trade name: NEWKALGEN RX-B, produced by Takemoto Oil & Fat Co., Ltd.), 20.2 g of clay, and 5.0 g of white carbon (trade name: Carplex #80 manufactured by Shionogi & Co., Ltd.) were mixed well in a mortar and then crushed using an air grinder to obtain a wettable powder containing 70% by weight of acetamiprid.

### Test Example 1 [Water Dissolution Test]

Samples each containing about 10 mg of the wettable powders obtained in Examples 1 to 11 and Comparative Examples 1 to 4 as an acetamiprid active ingredient, were weighed out accurately into 100 ml vials. 80 ml of distilled water of 25°C and 20 ml of methyl 4-hydroxybenzoate solution (500 mg/L distilled water) as an internal standard were then added thereto, and after putting the lids on the vials and inverting them 5 times, the vials were allowed to stand until the time of sampling in a constant temperature bath set at 25°C. Every time about 0.7 ml aliquots were sampled at a predetermined time, the vials were inverted 5 times prior to sampling (and samples were filtered with a 0.45 µm filter).

The concentrations of acetamiprid in the sampled solutions were measured by high performance liquid chromatography (HPLC) to determine the acetamiprid concentration in water, and the water dissolution rate was calculated as a percentage compared to the acetamiprid concentration when the acetamiprid added to water had completely dissolved in water. Results are shown in Table 1.

**[Table 1]**

| Composition | Average particle size | Water dissolution rate of acetamiprid (%) | | | | | | |
|---|---|---|---|---|---|---|---|---|
| | | 15 min | 4 hr | 24 hr | 72 hr | 120 hr | 240 hr | 360 hr |
| Ex. 1 | 11 µm | 8.9% | 16.3% | 25.5% | 39.6% | 48.6% | - | - |
| Ex. 2 | 10 µm | 14.2% | 27.0% | 41.9% | 63.2% | 73.2% | - | - |
| Ex. 3 | 10 µm | 6.6% | 12.1% | 19.7% | 31.7% | 40.6% | - | - |
| Ex. 4 | 9 µm | 11.0% | 21.8% | 37.9% | 60.8% | 73.1% | - | - |
| Ex. 5 | 11 µm | 7.1% | 13.6% | 22.9% | 36.0% | 45.7% | - | - |
| Ex. 6 | 10 µm | 10.7% | 12.8% | 32.3% | 50.9% | 67.2% | - | - |
| Ex. 7 | 10 µm | 8.4% | 17.0% | 29.3% | 49.2% | 58.3% | - | - |
| Ex. 8 | 11 µm | 6.0% | 11.5% | 20.0% | 29.0% | 35.6% | 47.3% | 61.0% |
| Ex. 9 | 10 µm | 5.6% | 10.9% | 17.4% | 24.6% | 29.3% | 39.0% | 49.2% |
| Ex. 10 | 9 µm | 8.2% | 14.8% | 22.9% | 31.6% | 40.9% | 48.1% | 62.0% |
| Ex. 11 | 10 µm | 5.8% | 9.9% | 15.7% | 21.8% | 25.5% | 32.0% | 40.9% |
| Comp. Ex. 1 | 14 µm | 3.2% | 7.6% | 12.8% | 19.9% | 23.2% | 26.0% | 25.0% |
| Comp. Ex. 2 | 16 µm | 4.7% | 9.9% | 15.7% | 22.5% | 28.2% | 31.3% | 30.0% |
| Comp. Ex. 3 | 15 µm | 9.3% | 14.7% | 20.2% | 30.8% | 36.9% | 41.2% | 37.8% |
| Comp. Ex. 4 Wettable powder containing 70% acetamiprid | - | 100.0% | 100.0% | - | - | - | - | - |
| -: Not determined | | | | | | | | |

From the results shown in Table 1, it became apparent that the water dissolution rates of acetamiprid in the wettable powders of Examples 1 to 11 was controlled to a low level and the water dissolution rates were observed to increase over time without resulting in dead stock.

Additionally, in contrast to the wettable powder (WP) containing 70% by weight of acetamiprid (Comparative Example 4) which was used as a control in Table 1 and which exhibited the water dissolution rate of 100% after a mere 15 minutes, the water dissolution rates of the wettable powders of each example were controlled to a low level, and thus the active ingredients therein were released continuously. The wettable powders of Comparative Examples 1 to 3 did not show any increase in the water dissolution rate after 120 hours, and thus tended to result in the dead stock.

The examples below are not according to the invention.

### (Examples 12 and 13)

6 g of acetamiprid (manufactured by Nippon Soda Co., Ltd.), 22.5 g of poly(methylmethacrylate) (PMMA) (weight average molecular weight: 10,000), and 1.5 g of hydrophobic white carbon (trade name: Sipernat D-17 manufactured by Degussa) were weighed out into a 1 l eggplant shaped flask, and after adding 300 ml of dichloromethane thereto, they were all dissolved in an ultrasonic bath.

The majority of the solvent was removed from this solution by distillation using an evaporator, and the resultant was further dried at 40°C for 2 hours using a vacuum dryer to obtain a solid matter.

The obtained solid matter was ground due to sufficient trituration in a mortar and the resultant was sorted using screens having apertures of 44 µm and 105 µm. A composition of fine particles having an average particle size of 74 µm (Example 12) was obtained by sorting the fraction between 44 µm and 105 µm from the rest and a composition of fine particles having an average particle size of 22 µm (Example 13) was obtained by sorting the fraction of 44 µm or less from the rest, respectively. The average particle size of the obtained compositions of fine particles was measured using a particle size measuring apparatus (MicroTrack 9320-X-100 manufactured by Nikkiso Co., Ltd.) (the same applies hereinafter).

### (Examples 14 and 15)

A composition of fine particles having an average particle size of 77 µm (Example 14) and a composition of fine particles having an average particle size of 21 µm (Example 15) were obtained by carrying out the same method as that used in Examples 1 and 2 except that PMMA was replaced by poly(methylmethacrylate)-methacrylic acid copolymer (PMMA-co-MAA) (weight average molecular weight: 34,000).

### (Example 16)

A composition of fine particles having an average particle size of 157 µm was obtained by carrying out the same method as that used in Examples 12 and 13 except that PMMA was replaced by another PMMA having an average molecular weight of 100,000, the screens were replaced with those having apertures of 105 µm and 250 µm, and the fraction between 105 µm and 250 µm was sorted from the rest.

### (Example 17)

A composition of fine particles having an average particle size of 163 µm was obtained by carrying out the same method as that used in Example 16 except that PMMA was replaced by polystyrene-methyl methacrylate copolymer (PS-MMA) (weight average molecular weight: 100,000).

### (Example 18)

100 g of acetamiprid, 375 g of PMMA (weight average molecular weight: 100,000), and 25 g of hydrophobic white carbon (trade name: Sipernat D-17 manufactured by Degussa) were were mixed well in a plastic bag. This mixture was then melted by heating and was kneaded in a continuous heating kneader (Model: KRC Kneader S-1 manufactured by Kurimoto Ltd.) whose body temperature was heated to 110°C to 120°C, and the obtained kneaded product was crushed using a food cutter. A composition of fine particles having an average particle size of 177 µm was obtained by sorting the fraction between 105 µm and 250 µm from the rest of the crushed product using the screens having apertures of 105 µm and 250 µm.

### (Comparative Example 5)

A composition of fine particles having an average particle size of 172 µm was obtained by carrying out the same method as that used in Example 16 except that PMMA was replaced by polyvinyl chloride-vinyl acetate copolymer (PVC-co-VA) (weight average molecular weight: 27,000).

### (Comparative Example 6)

A composition of fine particles having an average particle size of 87 µm was obtained by carrying out the same method as that used in Example 18 except that PMMA was replaced by low molecular weight polyethylene (weight average molecular weight: 2,600), the screens were replaced with those having apertures of 44 µm and 105 µm, and the fraction between 44 µm and 105 µm was sorted from the rest.

### (Comparative Example 7)

72.3 g of acetamiprid, 2.5 g of sodium lignin sulfonate (NEWKALGEN RX-B, produced by Takemoto Oil & Fat Co., Ltd.), 20.2 g of clay, and 5.0 g of white carbon (Carplex #80 manufactured by Shionogi & Co., Ltd.) were mixed well in a mortar and then crushed using an air grinder to obtain a wettable powder containing 70% by weight of acetamiprid.

### Test Example 2 [Water Dissolution Test]

Samples each containing about 10 mg of the compositions of fine particles or the wettable powders obtained in Examples 12 to 18 and Comparative Examples 5 to 7 as an acetamiprid active ingredient, were weighed out accurately into 100 ml vials. 80 ml of distilled water of 25°C and 20 ml of methyl 4-hydroxybenzoate solution (500 mg/L distilled water) as an internal standard were then added thereto, and after putting the lids on the vials and inverting them 5 times, the vials were allowed to stand until the time of sampling in a constant temperature bath set at 25°C.

When the sample was not in the form of a wettable powder, a surfactant mixture (composed of a ground mixture of 30% by weight of various surfactants and 70% by weight of clay) was added in an amount which was equal to 10% by weight of the sample weight after weighing the samples, and the resultant was mixed well and then distilled water and an internal standard were added thereto to disperse. Every time about 0.7 ml aliquots were sampled at a predetermined time, the vials were inverted 5 times prior to sampling (and samples were filtered with a 0.45 µm filter).

The concentrations of acetamiprid in the sampled solutions were measured by high performance liquid chromatography (HPLC) to determine the acetamiprid concentration in water, and the water dissolution rate was calculated as a percentage compared to the acetamiprid concentration when the acetamiprid added to water had completely dissolved in water. Measurement results are shown in Table 2.
[Table 2]

| Table 2 | | | | | | |
|---|---|---|---|---|---|---|
| Composition | Average particle size | Water dissolution rate of acetamiprid (%) | | | | |
| | | 15 min | 4 hr | 24 hr | 72 hr | 120 hr |
| Ex. 12 | 74 µm | 3.5% | 5.0% | 9.1% | 12.9% | 15.1% |
| Ex. 13 | 22 µm | 9.8% | 15.0% | 22.9% | 31.3% | 41.0% |
| Ex. 14 | 77 µm | 3.3% | 5.5% | 8.3% | 11.4% | 13.7% |
| Ex. 15 | 21 µm | 9.3% | 12.8% | 20.9% | 26.4% | 32.0% |
| Ex. 16 | 157 µm | 6.9% | 7.6% | 11.4% | 14.8% | 17.8% |
| Ex. 17 | 163 µm | 9.6% | 16.3% | 21.7% | 26.1% | 28.1% |
| Ex. 18 | 177 µm | 9.9% | 18.2% | 23.5% | 28.0% | 30.5% |
| Comp. Ex. 5 | 172 µm | 1.6% | 2.8% | 2.6% | 2.8% | 3.0% |
| Comp. Ex. 6 | 87 µm | 50.0% | 86.4% | 100.0% | - | - |
| Comp. Ex. 7 Wettable powder containing 70% acetamiprid | - | 100.0% | 100.0% | - | - | - |
| -: Not determined | | | | | | |

From Table 2, it is apparent that in contrast to the wettable powder (WP) containing 70% by weight of acetamiprid (Comparative Example 7) which was used as a control and which exhibited the water dissolution rate of 100% after mere 15 minutes, the water dissolution rates of the compositions of fine particles and the wettable powders of each example were controlled to a low level. The water dissolution rate of the composition of fine particles of Comparative Example 5 did not increase and resulte in dead stock. In addition, the water dissolution rate of the composition of fine particles of Comparative Example 6 reached 100% after 24 hours, and thus the result showed the absence of release control.

From these results, it became apparent that the water dissolution rates of acetamiprid in the compositions of fine particles of Examples 12 to 18 were controlled to a low level and the water dissolution rates were observed to increase over time without resulting in dead stock.

### INDUSTRIAL APPLICABILITY

According to the present invention, an agricultural chemical-containing resin composition in which the release of an agricultural chemical active ingredient is sufficiently controlled is provided.

By using an agricultural chemical formulation containing the agricultural chemical-containing resin composition of the present invention, it is possible to suppress the phenomenon in which a large amount of an agricultural chemical active ingredient is released in a short period of time immediately after an agricultural chemical treatment, that is, the phenomenon in which the initial burst is suppressed and the agricultural chemical active ingredient which should inherently be released remains without the entire amount thereof being released, or in other words, dead stock.

According to the agricultural chemical formulation of the present invention, residual activity can be maintained and the problem of an increase in the amount of agricultural chemical active ingredient remaining in the crop or the occurrence of phytotoxicity can be solved, and even the prevention of the agricultural chemical active ingredient to remain in the environment is possible. Moreover, in addition to the effects described above, the agricultural chemical formulation of the present invention achieves various effects such as the improvement in light stability, the control of vaporization properties, the improvement in the residual activity of the agricultural chemical active ingredient and reductions in the amount thereof being lost to the environment due to the improved rain resistance, reduction in the total amount of agricultural chemical being sprayed, reduction in the frequency of sprayings, and reduction in the toxicity to the sprayer.

The agricultural chemical formulation of the present invention is particularly useful as a seed treating agent and a soil treating agent.

## Claims

1. An agricultural chemical-containing resin composition comprising:
an agricultural chemical active ingredient (A);
a resin (B-1); and
a fatty acid metal salt (C-1),
wherein the agricultural chemical active ingredient (A) is dissolved or dispersed in the continuous phase resin (B-1),
wherein the agricultural chemical active ingredient (A) is at least one compound selected from the group consisting of nitenpyram, imidacloprid, acetamiprid, thiamethoxam, clothianidin, thiacloprid, and dinotefuran,
wherein the resin (B-1) is a styrene-maleic anhydride-based copolymer, and wherein the average particle size of the composition is within a range of 1 to 100 µm.

2. The agricultural chemical-containing resin composition according to Claim 1, wherein the fatty acid metal salt is calcium stearate.

3. The agricultural chemical-containing resin composition according to Claim 1, further comprising at least one material selected from the group consisting of a water-soluble polymer, silicon oxide, a hydrocarbon-based lubricant, and a surfactant.

4. The agricultural chemical-containing resin composition according to Claim 3, wherein the silicon oxide is hydrophobic white carbon.

5. The agricultural chemical-containing resin composition according to Claim 3, wherein the hydrocarbon-based lubricant is at least one material selected from the group consisting of liquid paraffin, natural paraffin, microwax, polyethylene wax, polypropylene wax, a chlorinated hydrocarbon, a fluorocarbon, microcrystalline wax, and Fischer-Tropsch wax.

6. The agricultural chemical-containing resin composition according to Claim 1, wherein the agricultural chemical active ingredient is at least one of compounds having a water solubility at 25°C of 100 ppm or more.

7. A method for producing the agricultural chemical-containing resin composition of Claim 1, the method comprising:
mixing, melting by heating, and kneading the agricultural chemical active ingredient (A), the resin (B-1), and the fatty acid metal salt (C-1); and
cooling a resulting product.

8. A method for producing the agricultural chemical-containing resin composition of Claim 1, the method comprising:
dissolving, homogenizing and mixing, or dissolving, homogenizing or mixing the agricultural chemical active ingredient (A), the resin (B-1), and the fatty acid metal salt (C-1) in an organic solvent; and
removing the organic solvent by distillation.

9. A method for producing the agricultural chemical-containing resin composition of Claim 1, the method comprising:
dissolving, homogenizing and mixing, or dissolving, homogenizing or mixing the agricultural chemical active ingredient (A) in an aqueous alkaline solution of the resin (B-1);
making a resulting mixture an acidic slurry;
filtering the slurry; and
drying a resulting product.

10. An agricultural chemical formulation comprising:
at least one of the agricultural chemical-containing resin composition according to any one of claims 1 to 6; and
at least one additional agricultural chemical active ingredient which is different from that contained in the composition.

11. The agricultural chemical formulation according to Claim 10, wherein the additional agricultural chemical active ingredient is a pyrethroid-based compound.

12. A treatment method comprising:
carrying out a seed treatment or a soil treatment simultaneously or on separate occasions using a composition containing at least one of the agricultural chemical-containing resin composition of any one of claims 1 to 6, and at least one additional agricultural chemical active ingredient different from that contained in the agricultural chemical-containing resin composition.

13. The treatment method according to claim12, wherein the additional agricultural chemical active ingredient is a pyrethroid-based compound.

14. A plant seed treated by the treatment method of Claim 12 or 13, wherein the agricultural chemical is uniformly adhered to said plant seed by being mixed with a sticker solution in which a water-soluble polymer and a dye are dissolved in water and then dried.

15. Non-therapeutic use of the agricultural chemical-containing resin composition of any one of claims 1 to 6 as food preservatives or biocides.

16. Non-therapeutic use of the agricultural chemical-containing resin composition of any one of claims 1 to 6 as soil pest control agents, termite control agents, clothing agents, pest control agents, wood pest control agents, bait agents, sanitary pest control agents, domestic communicable disease control agents, ship bottom coatings, algicides for the fishing nets or mildewproofing agents for wood.

17. The use of the agricultural chemical-containing resin composition according to claim 15 or 16, wherein the agricultural chemical-containing resin composition further comprises a pyrethroid-based compound.

18. The agricultural chemical-containing resin composition of any one of claims 1 to 6 for use as pharmaceuticals, veterinary medicines or animal ectoparasite control agents.

19. The agricultural chemical-containing resin composition according to claim 18, wherein the agricultural chemical-containing resin composition further comprises a pyrethroid-based compound.

## Patentansprüche

1. Agrarchemikalienhaltige Harzzusammensetzung, umfassend:
einen agrarchemischen Wirkstoff (A);
ein Harz (B-1); und
ein Fettsäuremetallsalz (C-1),
wobei der agrarchemische Wirkstoff (A) in der kontinuierlichen Phase von dem Harz (B-1) gelöst oder dispergiert ist,
wobei der agrarchemische Wirkstoff (A) mindestens eine Verbindung ist, die aus der Gruppe ausgewählt ist, die aus Nitenpyram, Imidacloprid, Acetamiprid, Thiamethoxam, Clothianidin, Thiacloprid und Dinotefuran besteht,
wobei das Harz (B-1) ein Styrol-Maleinsäureanhydridbasiertes Copolymer ist, und
wobei die durchschnittliche Partikelgröße der Zusammensetzung im Bereich von 1 bis 100 µm liegt.

2. Agrarchemikalienhaltige Harzzusammensetzung gemäß Anspruch 1, wobei das Fettsäuremetallsalz Calciumstearat ist.

3. Agrarchemikalienhaltige Harzzusammensetzung gemäß Anspruch 1, zusätzlich umfassend mindestens ein Material, das aus der Gruppe ausgewählt ist, die aus einem wasserlöslichen Polymer, Siliciumoxid, einem Schmierstoff auf Kohlenwasserstoffbasis und einem Tensid besteht.

4. Agrarchemikalienhaltige Harzzusammensetzung gemäß Anspruch 3, wobei das Siliciumoxid hydrophober weißer Kohlenstoff ist.

5. Agrarchemikalienhaltige Harzzusammensetzung gemäß Anspruch 3, wobei der Schmierstoff auf Kohlenwasserstoffbasis mindestens ein Material ist, das aus der Gruppe ausgewählt ist, die aus flüssigem Paraffin, natürlichem Paraffin, Mikrowachs, Polyethylenwachs, Polypropylenwachs, einem chlorierten Kohlenwasserstoff, einem Fluorkohlenstoff, mikrokristallinem Wachs und einem Fischer-Tropsch-Wachs besteht.

6. Agrarchemikalienhaltige Harzzusammensetzung gemäß Anspruch 1, wobei der agrarchemische Wirkstoff mindestens eine Verbindung mit einer Wasserlöslichkeit bei 25°C von 100 ppm oder mehr ist.

7. Verfahren zur Herstellung der agrarchemikalienhaltigen Harzzusammensetzung gemäß Anspruch 1, wobei das Verfahren umfasst:
das Mischen, das Schmelzen durch Erhitzen und das Kneten des agrarchemischen Wirkstoffs (A), des Harzes (B-1) und des Fettsäuremetallsalzes (C-1); und
das Kühlen eines resultierenden Produkts.

8. Verfahren zur Herstellung der agrarchemikalienhaltigen Harzzusammensetzung gemäß Anspruch 1, wobei das Verfahren umfasst:
das Auflösen, das Homogenisieren und das Mischen, oder das Auflösen, das Homogenisieren oder das Mischen des agrarchemischen Wirkstoffs (A), des Harzes (B-1) und des Fettsäuremetallsalzes (C-1) in einem organischen Lösungsmittel; und
das Entfernen des organischen Lösungsmittels durch Destillation.

9. Verfahren zur Herstellung der agrarchemikalienhaltigen Harzzusammensetzung gemäß Anspruch 1, wobei das Verfahren umfasst:
das Auflösen, das Homogenisieren und das Mischen, oder das Auflösen, das Homogenisieren oder das Mischens des agrarchemischen Wirkstoffs (A) in einer wässrigen alkalischen Lösung des Harzes (B-1);
das Herstellen einer sauren Aufschlämmung aus einer resultierenden Mischung;
das Filtrieren der Aufschlämmung; und
das Trocknen eines resultierenden Produkts.

10. Agrarchemische Formulierung, umfassend:
mindestens eine agrarchemikalienhaltige Harzzusammensetzung gemäß einem der Ansprüche 1 bis 6; und
mindestens einen zusätzlichen agrarchemischen Wirkstoff, der von dem in der Zusammensetzung enthaltenen verschieden ist.

11. Agrarchemische Formulierung gemäß Anspruch 10, wobei der zusätzliche agrarchemische Wirkstoff eine Pyrethroid-basierte Verbindung ist.

12. Behandlungsverfahren, umfassend:
das Durchführen einer Saatgutbehandlung oder einer Bodenbehandlung gleichzeitig oder bei separaten Gelegenheiten unter Verwendung einer Zusammensetzung, enthaltend mindestens eine agrarchemikalienhaltige Harzzusammensetzung gemäß einem der Ansprüche 1 bis 6 und mindestens einen zusätzlichen agrarchemischen Wirkstoff, der von dem in der agrarchemikalienhaltigen Harzzusammensetzung enthaltenen verschieden ist.

13. Behandlungsverfahren gemäß Anspruch 12, bei dem der zusätzliche agrarchemische Wirkstoff eine Pyrethroid-basierte Verbindung ist.

14. Pflanzensamen, behandelt mittels des Behandlungsverfahrens gemäß Anspruch 12 oder 13, wobei die Agrarchemikalie durch Mischen mit einer Klebelösung (sticker solution), in der ein wasserlösliches Polymer und ein Farbstoff in Wasser gelöst sind, und dann Trocken gleichmäßig an dem Pflanzensamen anhaftet.

15. Nicht-therapeutische Verwendung der agrarchemikalienhaltigen Harzzusammensetzung gemäß einem der Ansprüche 1 bis 6 als Lebensmittelkonservierungsstoff oder Biozid.

16. Nicht-therapeutische Verwendung der agrarchemikalienhaltigen Harzzusammensetzung gemäß einem der Ansprüche 1 bis 6 als Bodenschädlingsbekämpfungsmittel, Termitenbekämpfungsmittel, Mittel für Kleidung (clothing agent), Schädlingsbekämpfungsmittel, Holzschädlingsbekämpfungsmittel, Ködermittel, Sanitärschädlingsbekämpfungsmittel, Mittel gegen heimische übertragbare Krankheiten, Schiffsbodenbeschichtung, Algizid für Fischernetze oder Schimmelschutzmittel für Holz.

17. Verwendung der agrarchemikalienhaltigen Harzzusammensetzung gemäß Anspruch 15 oder 16, wobei die agrarchemikalienhaltige Harzzusammensetzung zusätzlich eine Pyrethroid-basierte Verbindung umfasst.

18. Agrarchemikalienhaltige Harzzusammensetzung gemäß einem der Ansprüche 1 bis 6 zur Verwendung als Arzneimittel, Medikament für Tiere oder Ektoparasitenbekämpfungsmittel für Tiere.

19. Agrarchemikalienhaltige Harzzusammensetzung gemäß Anspruch 18, wobei die agrarchemikalienhaltige Harzzusammensetzung zusätzlich eine Pyrethroid-basierte Verbindung umfasst.

## Revendications

1. Composition de résine contenant un produit agrochimique comprenant :
un ingrédient actif de produit agrochimique (A) ;
une résine (B-1) ; et
un sel métallique d'acide gras (C-1),
dans laquelle l'ingrédient actif de produit agrochimique (A) est dissous ou dispersé dans la résine en phase continue (B-1),
dans laquelle l'ingrédient actif de produit agrochimique (A) est au moins un composé choisi dans le groupe constitué de nitenpyrame, d'imidaclopride, d'acétamipride, de thiaméthoxame, de clothianidine, de thiaclopride, et de dinotéfurane,
dans laquelle la résine (B-1) est un copolymère à base de styrène-anhydride maléique, et dans laquelle la taille moyenne de particule de la composition est dans une plage de 1 à 100 µm.

2. Composition de résine contenant un produit agrochimique selon la revendication 1, dans laquelle le sel métallique d'acide gras est le stéarate de calcium.

3. Composition de résine contenant un produit agrochimique selon la revendication 1, comprenant en outre au moins un matériau choisi dans le groupe constitué d'un polymère soluble dans l'eau, de l'oxyde de silicium, d'un lubrifiant à base d'hydrocarbure, et d'un tensioactif.

4. Composition de résine contenant un produit agrochimique selon la revendication 3, dans laquelle l'oxyde de silicium est le carbone blanc hydrophobe.

5. Composition de résine contenant un produit agrochimique selon la revendication 3, dans laquelle le lubrifiant à base d'hydrocarbure est au moins un matériau choisi dans le groupe constitué de paraffine liquide, de paraffine naturelle, de microcire, de cire de polyéthylène, de cire de polypropylène, d'un hydrocarbure chloré, d'un fluorocarbone, d'une cire microcristalline, et d'une cire de Fischer-Tropsch.

6. Composition de résine contenant un produit agrochimique selon la revendication 1, dans laquelle l'ingrédient actif de produit agrochimique est au moins l'un des composés ayant une solubilité dans l'eau à 25 °C de 100 ppm ou plus.

7. Procédé de production de la composition de résine contenant un produit agrochimique de la revendication 1, le procédé comprenant :
le mélange, la fusion par chauffage, et le malaxage de l'ingrédient actif de produit agrochimique (A), de la résine (B-1) et du sel métallique d'acide gras (C-1) ; et
le refroidissement d'un produit résultant.

8. Procédé de production de la composition de résine contenant un produit agrochimique de la revendication 1, le procédé comprenant :
la dissolution, l'homogénéisation et le mélange, ou la dissolution, l'homogénéisation ou le mélange de l'ingrédient actif de produit agrochimique (A), de la résine (B-1) et du sel métallique d'acide gras (C-1) dans un solvant organique ; et
l'élimination du solvant organique par distillation.

9. Procédé de production de la composition de résine contenant un produit agrochimique de la revendication 1, le procédé comprenant :
la dissolution, l'homogénéisation et le mélange, ou la dissolution, l'homogénéisation ou le mélange de l'ingrédient actif de produit agrochimique (A) dans une solution alcaline aqueuse de la résine (B-1) ;
le fait de transformer un mélange résultant en une boue acide ;
la filtration de la boue ; et
le séchage d'un produit résultant.

10. Formulation de produit agrochimique comprenant :
au moins l'une de la composition de résine contenant un produit agrochimique selon l'une quelconque des revendications 1 à 6 ; et
au moins un ingrédient actif de produit agrochimique supplémentaire qui est différent de celui contenu dans la composition.

11. Formulation de produit agrochimique selon la revendication 10, dans laquelle l'ingrédient actif de produit agrochimique supplémentaire est un composé à base de pyréthroïde.

12. Procédé de traitement, comprenant :
la réalisation d'un traitement des semences ou d'un traitement du sol simultanément ou à des occasions séparées à l'aide d'une composition contenant au moins l'une de la composition de résine contenant un produit agrochimique de l'une quelconque des revendications 1 à 6, et au moins un ingrédient actif de produit agrochimique supplémentaire différent de celui contenu dans la composition de résine contenant un produit agrochimique.

13. Procédé de traitement selon la revendication 12, dans lequel l'ingrédient actif de produit agrochimique supplémentaire est un composé à base de pyréthroïde.

14. Semence de plante traitée par le procédé de traitement de la revendication 12 ou 13, dans laquelle le produit agrochimique est mis à adhérer de façon uniforme à ladite semence de plante en étant mélangé avec une solution d'adhésif dans laquelle un polymère soluble dans l'eau et un colorant sont dissous dans l'eau puis séchés.

15. Utilisation non thérapeutique de la composition de résine contenant un produit agrochimique de l'une quelconque des revendications 1 à 6 en tant que conservateurs d'aliments ou biocides.

16. Utilisation non thérapeutique de la composition de résine contenant un produit agrochimique selon l'une quelconque des revendications 1 à 6 en tant qu'agents de lutte contre les parasites du sol, agents de lutte contre les termites, agents de garniture, agents de lutte contre les parasites, agents de lutte contre les parasites du bois, agents d'appât, agents de lutte contre les parasites sanitaires, agents de lutte contre les maladies domestiques transmissibles, revêtements de coque de navire, algicides pour les filets de pêche ou agents de résistance à la moisissure pour le bois.

17. Utilisation de la composition de résine contenant un produit agrochimique selon la revendication 15 ou 16, dans laquelle la composition de résine contenant un produit agrochimique comprend en outre un composé à base de pyréthroïde.

18. Composition de résine contenant un produit agrochimique selon l'une quelconque des revendications 1 à 6 destinée à être utilisée en tant que produits pharmaceutiques, médicaments vétérinaires ou agents de lutte contre les ectoparasites animaux.

19. Composition de résine contenant un produit agrochimique selon la revendication 18, dans laquelle la composition de résine contenant un produit agrochimique comprend en outre un composé à base de pyréthroïde.
